# EUROPÄISCHE PATENTANMELDUNG

(11) **EP 4 050 577 A1**
(43) Veröffentlichungstag der Anmeldung: **31.08.2022**
(21) Anmeldenummer: 21382158.0
(22) Anmeldetag: 24.02.2021
(51) Int. Cl.: G07C 3/00, G05B 15/02, G05B 23/02, G06F 21/85, G07C 9/00

(54) **VERFAHREN ZUR INBETRIEBNAHME EINES TÜRSYSTEMS**

(71) Anmelder: dormakaba Deutschland GmbH, 58256 Ennepetal (DE); dormakaba International Holding GmbH, 58256 Ennepetal (DE); dormakaba Schweiz AG, 8153 Rümlang (CH); dormakaba EAD GmbH, 78056 Villingen-Schwenningen (DE); dormakaba España S.A.U., 28050 Madrid (ES)
(72) Erfinder: Oberste-Ufer, Kai, 58256 Ennepetal (DE); Rappel, Christian, 8620 Wetzikon (CH); Vogler, Thomas, 58256 Ennepetal (DE); Busch, Sven, 58256 Ennepetal (DE); Halder, Ingo, 58256 Ennepetal (DE); Gehrmann, Bernd, 58256 Ennepetal (DE); Dudzinski, Andrzej, 58256 Ennepetal (DE); Gupta, Chandra Prakash, 58256 Ennepetal (DE); Borchmann, Oliver, 58256 Ennepetal (DE); Lorenz, Frank, 8153 Rümlang (CH); Wolf, Martin, 53179 Bonn (DE); Bradfisch, Alexander, 58256 Ennepetal (DE); Giernich, Stephan, 53179 Bonn (DE); Guerra, Pedro, Madrid (ES)
(74) Vertreter: Balder IP Law, S.L.

(57) **Zusammenfassung**

Die Erfindung betrifft ein Verfahren (200) zur Inbetriebnahme eines Türsystems (60, 61, 62), wobei das Türsystem (60, 61, 62) mehrere Türkomponenten (30, 31, 33, 34, 35, 36, 37, 38, 39, 51, 52, 53, 56, 57, 58, 59) aufweist, wobei zumindest eine Türkomponente (30, 31, 33, 34, 35, 36, 37, 38, 39, 51, 52, 53, 56, 57, 58, 59) als ein Steuergerät (30) ausgebildet ist, wobei das Verfahren (200) die folgenden Schritte umfasst:
a. Speichern einer elektronischen Konfiguration (82) des Türsystems (60, 61, 62) in dem Steuergerät (30),
b. Durchführung zumindest eines Inbetriebnahmeschritts mittels der elektronischen Konfiguration (82).

## Beschreibung

Die Erfindung betrifft ein Verfahren zur Inbetriebnahme eines Türsystems.

Türsysteme können unterschiedliche Türkomponenten umfassen, die die Funktion einer Tür beeinflussen. Beispielsweise kann ein Türsystem Türantriebe, Fluchtwegsicherungen und/oder Zutrittskontrollvorrichtungen umfassen. Nach dem Stand der Technik werden die Türantrieben, die Fluchtwegsicherungen und/oder die Zutrittskontrollvorrichtungen jeweils separat installiert und in Betrieb genommen. Hierbei sind in der Regel unterschiedliche Gewerke beteiligt. Die Gewerke nehmen jeweils separat Verschaltungen und Parametrierungen vor. Aus diesem Grund treten sind die Türkomponenten häufig untereinander nicht abgestimmt oder fehlerhaft installiert, so dass die Qualität der Inbetriebnahme nicht sichergestellt werden kann. Daher kann es zu Problemen bei der Sicherheit des Türsystems oder zu Fehlfunktionen kommen oder Nachbesserungen können erforderlich sein.

Es ist daher Aufgabe der Erfindung, ein Verfahren zur Inbetriebnahme eines Türsystems, ein Türsystem, eine Türanordnung und/oder ein Computerprogrammprodukt bereitzustellen, das die Inbetriebnahme derart verändert, so dass im Betrieb die Sicherheit des Türsystems erhöht ist, Fehlfunktionen verringert sind und/oder die Inbetriebnahme ohne Nachbesserungen möglich ist.

Diese Aufgabe wird mit einem Verfahren mit den Merkmalen des Anspruchs 1 gelöst. Vorteilhafte Weiterbildungen des Verfahrens sind in den abhängigen Ansprüchen, der Beschreibung und in den Figuren angegeben. Merkmale und Details, die in Zusammenhang mit dem erfindungsgemäßen Verfahren beschrieben sind, gelten dabei auch in Zusammenhang mit einem erfindungsgemäßen Computerprogrammprodukt und/oder einem erfindungsgemäßen Türsystem und/oder einer erfindungsgemäßen Türanordnung und umgekehrt. Insbesondere sind ein Computerprogrammprodukt, mit dem ein erfindungsgemäßes Verfahren, insbesondere ein Verfahren nach einem der Ansprüche 1 bis 15, ausführbar ist, und/oder ein Türsystem oder eine Türanordnung, mit dem bzw. der ein erfindungsgemäßes Verfahren, insbesondere ein Verfahren nach einem der Ansprüche 1 bis 15, ausführbar ist, unter Schutz gestellt. Das erfindungsgemäße Türsystem und die erfindungsgemäße Türanordnung umfassen zumindest einen elektronischen Speicher als computerlesbares Medium umfassen, auf dem das erfindungsgemäße Computerprogramm ausführbar gespeichert ist. Dabei können die in der Beschreibung und in den Ansprüchen erwähnten Merkmale jeweils einzeln für sich oder in Kombination erfindungswesentlich sein. Die Beschreibung charakterisiert und spezifiziert die Erfindung insbesondere im Zusammenhang mit den Figuren zusätzlich.

Das erfindungsgemäße Verfahren dient zur Inbetriebnahme eines Türsystems. Das Türsystem umfasst mehrere Türkomponenten. Zumindest eine Türkomponente ist als ein Steuergerät ausgebildet. Das erfindungsgemäße Verfahren umfasst die folgenden Schritte:
a. Speichern einer elektronischen Konfiguration des Türsystems in dem Steuergerät,
b. Durchführung eines Inbetriebnahmeschritts mittels der elektronischen Konfiguration.

Dadurch, dass das Türsystem mit mehreren Türkomponenten durch eine elektronische Konfiguration zumindest teilweise in Betrieb genommen wird, werden Abstimmungsfehler vermieden und/oder fehlerhafte Installationen erkannt. Hierdurch wird die Sicherheit des Türsystems erhöht. Hierbei umfasst die elektronische Konfiguration eine Information betreffend der mehreren Türkomponenten. Bevorzugt sind Informationen für das Türsystem in einer gemeinsamen elektronischen Konfiguration zusammengefasst.

Die elektronische Konfiguration ist insbesondere als zumindest eine elektronische Datei ausgebildet. Bevorzugt ist die elektronische Konfiguration als ein elektronisches Template ausgebildet. Es kann sein, dass die Konfiguration eine elektronische Datei mit Informationen zu mehreren Türkomponenten umfasst. Alternativ kann die elektronische Konfiguration elektronische Dateien für einzelne Türkomponenten oder Türkomponentengruppen umfassen.

Als ein Türsystem werden insbesondere mehrere Türkomponenten bezeichnet, die ausgebildet sind an zumindest einer Tür angeordnet zu werden.

Zumindest eine der Türkomponenten dient insbesondere dazu, den Türzustand zu verändern. Die Änderung des Türzustands kann z. B. einem Öffnen der Tür, einem Schließen der Tür, einem Entriegeln der Tür, einem Verriegeln der Tür, einem Bereitstellen eines Zustands für ein manuelles Entriegeln und/oder Verriegeln, Öffnen und/oder Schließen der Tür entsprechen.

Beispielsweise kann eine Türkomponente als ein motorischer Türantrieb ausgebildet sein. Der motorische Türantrieb kann ein motorisches Öffnen und/oder Schließen der Tür bewirken. In einem anderen Beispiel kann eine Türkomponente als ein elektrisch betätigbares Verriegelungselement ausgebildet sein. Das elektrisch betätigbares Verriegelungselement kann eine Entriegelung und/oder Verriegelung der Tür bewirken. Das Verriegelungselement kann beispielsweise z. B. als ein Motorschloss, als ein motorischer Schließzylinder oder eine elektromagnetische Türverriegelung ausgebildet sein. In einem weiteren Beispiel kann eine Türkomponente ausgebildet sein, die Tür in einen manuell entriegelbaren Zustand zu überführen. Eine Türkomponente, die die Tür in einen manuell entriegelbaren Zustand überfahren kann, wird im Folgenden als Entriegelungselement bezeichnet. Beispielsweise kann die Türkomponente als ein elektrischer Türöffner ausgebildet sein. Der elektrische Türöffner kann einen Zustand einnehmen, in denen durch eine manuelle Betätigung der Tür ein Entriegeln und ein gleichzeitiges Öffnen der Tür bewirkt wird, während in einem anderen Zustand des Türöffners eine manuelle Betätigung der Tür und damit ein Entriegeln und Öffnen der Tür verhindert ist. Weitere Beispiele für das Bereitstellen eines Zustands zum manuellen Entriegeln einer Tür sind in einem elektromechanischen Schließzylinder und/oder einem elektromechanischen Beschlag zu sehen.

Das Türsystem kann zumindest eine Türkomponente umfassen, die ein Signal zur Änderung des Türzustands erzeugt. Eine derartige Türkomponente wird als Signalgeber bezeichnet. Das Signal kann insbesondere bewirken, dass eine weitere Türkomponente, z. B. der motorische Türantrieb, das Verriegelungselement und/oder das Entriegelungselement den Türzustand ändert. Beispielsweise kann der Signalgeber als ein Sensor ausgebildet sein, der eine Annäherung einer Person an die Tür detektiert. In einem anderen Beispiel kann der Signalgeber als ein Handtaster oder Schlüsseltaster ausbildet sein, durch dessen Betätigung ein Anwender seinen Öffnungswunsch dem Türsystem übermittelt. In einem weiteren Beispiel kann der Signalgeber als ein Gefahrenmelder, beispielsweise ein Rauchmelder, ausgebildet sein. In einem weiteren Beispiel kann der Signalgeber als eine Authentifizierungsvorrichtung ausgebildet sein. Die Authentifizierungsvorrichtung überprüft eine Berechtigung eines Anwenders durch die Tür zu gehen. Ist der Anwender berechtigt, so sendet die Authentifizierungsvorrichtung ein entsprechendes Signal an eine weitere Türkomponente, z. B. an eine Verriegelungsvorrichtung oder eine Entriegelungsvorrichtung, die den Zutritt ermöglicht.

Das Türsystem kann ausgebildet sein, ein Zutrittsattribut eines berechtigten Benutzers zu empfangen. Hierzu kann das Türsystem eine Erfassungseinheit als Türkomponente umfassen. Die Erfassungseinheit kann als eine Sende- und Empfangseinheit, als ein biometrischer Sensor, als ein Tastenfeld zur PIN-Eingabe und/oder als ein Kontaktelement zur elektrischen Kontaktierung eines insbesondere elektronischen Schlüssels ausgebildet sein. Das Zutrittsattribut kann als ein Credential oder als ein biometrisches Merkmal des Benutzers ausgebildet sein. Das Credential kann z. B. einen Zugangscode und/oder ein Zeitfenster für eine Zutrittsberechtigung umfassen. Es kann sein, dass das Türsystem z. B. einen Leser mit einer Sende- und Empfangseinheit zum kabellosen Empfang eines Zutrittsattributs, insbesondere Credentials, ausgebildet ist. Die Sende- und Empfangseinheit kann ausgebildet sein, mit einem mobilen Endgerät, insbesondere einem Mobiltelefon oder einer Karte, durch Nahbereichskommunikation, insbesondere RFID, NFC, WIFI oder Bluetooth Low Energy, zu kommunizieren. Z. B. kann ein Leser als eine Erfassungseinheit angesehen werden.

Eine Zutrittskontrollvorrichtung kann eine Authentifizierungsvorrichtung und/oder eine Erfassungseinheit umfassen.

Es kann sein, dass in derselben Türkomponente mehrere Funktionen verwirklicht sind. Beispielsweise kann ein elektromechanischer Beschlag ein Kupplungselement umfassen, das in einem eingekuppelten Zustand das manuelle Entriegeln der Tür erlaubt. Zugleich umfasst der elektromechanische Beschlag eine Erfassungseinheit, insbesondere eine Sende- und Empfangseinheit zum kabellosen Empfang eines Credentials. Zudem kann der elektromechanische Beschlag einen Prozessor und einen Speicher umfassen, mit dem das Credential ausgewertet und über den Zutritt entschieden wird. Somit wirkt der elektromechanische Beschlag als eine Authentifizierungsvorrichtung.

Das Türsystem kann zur Anordnung an einer Tür ausgebildet sein. Bevorzugt umfasst ein Türsystem alle zur Anordnung an einer Tür vorgesehene Türkomponenten. Es kann sein, dass das Türsystem für einflügelige oder für zweiflügelige Türen ausgebildet ist.

Das Türsystem kann zur Anordnung an mehrere Türen ausgebildet sein. Beispielsweise kann das Türsystem Türkomponenten für bis zu vier Türen umfassen. Es kann sein, dass die Türen teilweise zweiflügelig ausgebildet sind. Bevorzugt umfasst ein Türsystem alle zur Anordnung an die mehreren Tür vorgesehene Türkomponenten.

Es ist denkbar, dass die Türkomponenten für zumindest einen Teil der mehreren Türen funktional zusammenwirken, insbesondere eine Schleuse bilden.

Das Steuergerät umfasst bevorzugt einen elektronischen Prozessor. Das Steuergerät umfasst bevorzugt zumindest einen elektronischen Speicher. In dem Speicher ist die elektronische Konfiguration speicherbar.

Als Inbetriebnahme werden insbesondere die Schritte bezeichnet, die nach der Anbringung der Türkomponenten an der Tür und die Verkabelung der Türkomponenten an der Tür erfolgen, bevor der Betrieb des Türsystems beginnt.

Es kann vorgesehen sein, dass das Verfahren teilweise mittels eines mobilen Endgeräts durchgeführt wird. Das mobile Endgerät wird insbesondere von dem Installateur während der Inbetriebnahme verwendet. Bei dem mobilen Endgerät kann es sich z. B. ein Mobiltelefon oder um ein Tablet, handeln.

Es kann sein, dass das Steuergerät eine Sende- und Empfangseinheit zur kabellosen Nahbereichskommunikation mit dem mobilen Endgerät umfasst. Bei der kabellosen Nahbereichskommunikation kann es sich z. B. um Bluetooth Low Energy (BLE), NFC, RFID oder WIFI, handeln.

Bevorzugt umfasst jedes Türsystem nur ein einziges Steuergerät, in dem die elektronische Konfiguration gespeichert ist.

Es kann sein, dass eine Recheneinheit vorgesehen ist. Die Recheneinheit kann zumindest einen elektronischen Speicher umfassen. Der elektronische Speicher kann zumindest eine Datenbank umfassen. Es kann sein, dass die elektronische Konfiguration von der Recheneinheit in das Steuergerät ladbar ist. Die Recheneinheit kann insbesondere als eine Cloud ausgebildet sein.

Die Recheneinheit kann z. B. als eine Cloud und/oder als eine Cloud und einen mit der Cloud verbundenen Rechengerät, z. B. einem Personal Computer, ausgebildet sein. Die Recheneinheit kann mit einem mobilen Endgerät, z. B. einem Mobiltelefon oder einem Tablet, verbunden oder verbindbar sein. Hierbei können die Recheneinheit und das mobile Endgerät beispielsweise über eine Telekommunikationsverbindung und/oder über das Internet miteinander verbindbar sein.

Das Türsystem umfasst bevorzugt unterschiedliche Türkomponententypen. Ein Türkomponententyp ist insbesondere definiert durch die Funktion, die der Türkomponententyp in Bezug auf die Tür hat, an der die Türkomponente, die dem Türkomponententyp entspricht, zu installieren ist. Die Funktion kann die beschriebene Änderung eines Türzustands und/oder die Erzeugung eines Signals zur Änderung des Türzustands umfassen.

Des Weiteren kann der Türkomponententyp Eigenschaften der Tür beinhalten oder auf die Eigenschaft der Tür abgestimmt sein. Die Eigenschaften der Tür können funktionellen Eigenschaften entsprechen, z. B. Schiebetüren, Drehflügeltüren und Karusselltüren. Die Eigenschaften der Tür können der Ausbildung als Vollblatt oder als Rohrrahmentür entsprechen. Die Eigenschaften der Tür können die räumlichen Maße und/oder dem Gewicht der Tür entsprechen. Beispielsweise kann die Leistungsstärke des Türantriebs an das Gewicht der Tür angepasst sein. Des Weiteren kann der Türkomponententyp funktionelle Eigenschaften des Türkomponentyps selber beinhalten. Beispiele der funktionellen Eigenschaften können z. B. "für den Fluchtweg geeignet", "für eine Brandschutztür" "selbstverriegelnd", "selbstschließend" umfassen.

Beispiele für unterschiedlichen Türkomponententypen können z. B. ein "selbstverriegelndes Antipanikschloss mit Motor für Vollblatttüren" oder "selbstschließender Drehflügeltürantrieb für den Einsatz an normalen Türen bis zu 1100 mm Breite oder 160 kg Gewicht" sein.

Es kann sein, dass Türkomponententypen sich zusätzlich oder alternativ durch die Art und/oder die Anordnung der elektrischen Verbindung zu zumindest einem weiteren Türkomponententyp unterscheiden. Beispielsweise können sich die Türkomponententypen darin unterscheiden, an welcher Schnittstelle eine Verbindung zu welcher weiteren Türkomponente herzustellen ist. Somit können sich die Türkomponententypen z. B. durch eine Belegung von Anschlussklemmen unterscheiden. Zusätzlich oder alternativ unterscheiden sich die Türkomponententypen durch die Art der elektronischen Einbindung in das Türsystem. Beispielsweise können sich die Türkomponententypen darin unterscheiden, ob eine Verbindung zu zumindest einer weiteren Türkomponente über ein Bussystem erfolgt, und ggf. über welches Bussystem.

Es kann sein, dass das Steuergerät und zumindest eine der weiteren Türkomponenten des Türsystems in einer informationstechnischen Verbindung miteinander stehen. Somit können das Steuergerät und die weitere Türkomponente elektronische Nachrichten austauschen. Bevorzugt steht das Steuergerät mit mehreren der weiteren Türkomponenten des Türsystems in der informationstechnischen Verbindung. Besonders bevorzugt steht das Steuergerät mit allen weiteren Türkomponenten des Türsystems in einer informationstechnischen Verbindung.

Beispielsweise kann die zumindest eine weitere Türkomponenten und das Steuergerät über ein erstes Bussystem miteinander verbunden sein. Unter einer Verbindung mit einem Bussystem wird im Folgenden eine unmittelbare Verbindung verstanden, so dass eine mit dem Bussystem verbundene Komponente als Teilnehmer des Bussystems mit einer eigenen Busadresse anzusehen ist. Das erste Bussystem kann als ein Feldbus, insbesondere als ein CAN-Bus, ausgebildet sein.

Es kann vorgesehen sein, dass zumindest ein Teil der Türkomponenten über ein weiteres Bussystem mit dem Steuergerät verbunden sind. Das weitere Bussystem kann als ein Feldbus, insbesondere als ein RS 485 Bus, ausgestaltet sein. Bei der zumindest einen Türkomponente, die über das weitere Bussystem mit dem Steuergerät verbunden ist, kann es sich insbesondere um eine Erfassungseinheit handeln. Bevorzugt sind weitere Erfassungseinheiten mit dem weiteren Bussystem verbunden.

Bevorzugt ist vorgesehen, dass die elektronische Konfiguration eine Komponentenaufstellung umfasst. Die elektronische Konfiguration kann eine Komponentenaufstellung über zumindest einen Teil der vorgesehenen Türkomponenten des Türsystems umfassen. Bevorzugt umfasst die Komponentenaufstellung zumindest die Türkomponenten des Türsystems, die mit dem Steuergerät in einer informationstechnischen Verbindung stehen. Besonders bevorzugt umfasst die Komponentenaufstellung alle Türkomponenten des Türsystems.

Zusätzlich oder alternativ kann es sein, dass die elektronische Konfiguration eine Komponentenaufstellung über zumindest einen Teil der vorgesehenen Türkomponententypen des Türsystems umfasst. Bevorzugt umfasst die Komponentenaufstellung zumindest die Türkomponententypen des Türsystems, die mit dem Steuergerät in einer informationstechnischen Verbindung stehen. Besonders bevorzugt umfasst die Komponentenaufstellung alle Türkomponententypen des Türsystems.

Es kann sein, dass die Komponentenaufstellung ebenfalls die vorgesehene Position einer vorgesehenen Türkomponenten und/oder eines vorgesehenen Türkomponententyps an der zumindest einen Tür, an der das Türsystem angeordnet werden soll, umfasst. Somit ist bevorzugt vorgesehen, dass das Steuergerät mittels der Komponentenaufstellung zumindest teilweise Kenntnis davon hat, wie das zu verbauenden Türsystem ausgestaltet ist.

Es kann vorgesehen sein, dass das Steuergerät Kenntnis von den verbauten Türkomponententypen oder den verbauten Türkomponenten hat, die an der zumindest einen Tür des Türsystems angeordnet sind. Es kann vorgesehen sein, dass das Steuergerät Kenntnis von den verbauten Türkomponententypen oder den verbauten Türkomponenten des Türsystems hat, die in informationstechnischer Verbindung, insbesondere über das erste oder das weitere Bussystem, zu dem Steuergerät stehen. Es kann vorgesehen sein, dass das Steuergerät Kenntnis von allen verbauten Türkomponententypen oder den verbauten Türkomponenten des Türsystems hat. Hierbei kann es sein, dass alle verbauten Türkomponenten des Türsystems in informationstechnischer Verbindung mit dem Steuergerät stehen. Alternativ es kann sein, dass verbaute Türkomponenten, an denen wiederrum eine weitere Türkomponente angeschlossen ist, die weitere Türkomponente an das Steuergerät meldet, und/oder ein Installateur, insbesondere über das mobile Endgerät, weitere Türkomponenten dem Steuergerät meldet.

Bevorzugt ist vorgesehen, dass das Steuergerät die Komponentenaufstellung mit den tatsächlich verbauten Türkomponenten und/oder den tatsächlich verbauten Türkomponententypen vergleicht. Dieses kann dem Schritt b. entsprechen.

Ergibt der Vergleich, dass die Komponentenaufstellung den tatsächlich verbauten Türkomponenten und/oder den tatsächlich verbauten Türkomponententypen entspricht, so wird mit dem Inbetriebnahmeverfahren von dem Steuergerät, insbesondere automatisch, wie vorgesehen, weiterverfahren.

Ergibt der Vergleich, dass die Komponentenaufstellung den tatsächlich verbauten Türkomponenten und/oder den tatsächlich verbauten Türkomponententypen nicht entspricht, ist bevorzugt vorgesehen, dass das Inbetriebnahmeverfahren von dem Steuergerät unterbrochen wird. Es kann sein, dass das Ergebnis des Vergleichs dem Installateur auf einem mobilen Endgerät, angezeigt wird.

Es kann vorgesehen sein, dass eine Vorgabe elektronisch hinterlegt ist, wie bei einer Abweichung der Komponentenaufstellung von den verbauten Türkomponententypen oder den verbauten Türkomponenten das Inbetriebnahme-Verfahren weiterzuführen ist.

Die Vorgabe, wie das Inbetriebnahme-Verfahren weiterzuführen ist, kann in Abhängigkeit von der Art der Abweichung eine der folgenden Optionen entsprechen:
- die Aufnahme eines Betriebs des Türsystems ist elektronisch verhindert,
- die Aufnahme eines Betriebs des Türsystems erfolgt mit einem eingeschränktem Türkomponentenumfang,
- die Aufnahme eines Betriebs des Türsystems erfolgt wie vorgesehen.

In der Regel wird die Aufnahme des Betriebs oder die Weiterführung des Inbetriebnahmeverfahrens elektronisch verhindert sein. Es kann sein, dass die Aufnahme des Betriebs mit einem eingeschränkten Türkomponenten- und/oder Funktionsumfang erfolgt. Beispielsweise ist während der Fertigstellung eines Gebäudes noch nicht geplant, Zugangskontrollvorrichtungen zu installieren oder in Betrieb zu nehmen. Daher ist es denkbar, dass zunächst das Türsystem ohne Zugangskontrollvorrichtung in Betrieb geht.

Die Aufnahme des Betriebs kann beispielsweise erfolgen, wenn eine vorgesehene Türkomponente durch eine gleich- oder höherwertige Türkomponente ersetzt ist.

Es kann sein, dass die Vorgabe automatisch von dem Steuergerät umgesetzt wird. Hierbei kann es sein, dass dem Installateur auf dem mobilen Endgerät die Vorgabe mitgeteilt wird.

Alternativ wird dem Installateur die Vorgabe auf dem mobilen Endgerät angezeigt, und um eine Bestätigung durch Eingabe auf dem mobilen Endgerät, gebeten.

In einer Ausgestaltung des erfindungsgemäßen Verfahrens wird stets die Inbetriebnahme des Türsystems unterbrochen, wenn eine Abweichung durch das Steuergerät festgestellt ist. Insbesondere wird der Abbruch des Inbetriebnahmeverfahrens dem Installateur, z. B. auf dem mobilen Endgerät, angezeigt.

Es kann vorgesehen sein, dass, wenn die Fortführung des Inbetriebnahme-Verfahrens durch die Abweichung verhindert ist, eine alternative Konfiguration auf dem Speichergerät gespeichert wird. Somit wird Schritt a. mit einer alternativen Konfiguration wiederholt. Die alternative Konfiguration kann beispielsweise von einer Datenbank bereitgestellt werden.

Es kann sein, dass verschiedene vorgesehene Türkomponentenzusammenstellungen jeweils unterschiedliche Türsystemtypen bilden. Bevorzugt ist jedem Türsystemtyp eine elektronische Konfiguration, insbesondere genau eine elektronische Konfiguration, zugeordnet. Für jeden Türsystemtyp ist jeweils eine Konfiguration, z. B. in der Datenbank hinterlegt. Die alternative Konfiguration kann z. B. aus der Datenbank in das Speichergerät geladen werden.

Wenn die Fortführung des Inbetriebnahmeverfahrens durch die Abweichung verhindert ist, kann vorgesehen sein, dass von einem Türsystemtyp zu einem alternativen Türsystemtyp, das den verbauten Türkomponententypen oder den verbauten Türkomponenten entspricht, gewechselt wird, wobei der Schritt a., bevorzugt zudem Schritt b., mit der elektronischen Konfiguration des alternativen Türsystemtyps wiederholt wird.

Es kann sein, dass ein elektronisches Konfigurationssystem automatisch zu den tatsächlich verbauten Türkomponenten die passende, alternative Konfiguration in der Datenbank findet und zum Speichern auf dem Steuergerät bereitstellt. Alternativ kann es sein, dass das elektronische Konfigurationssystem eine zu den tatsächlich verbauten Türkomponenten passende, alternative Konfiguration vorschlägt und durch den Installateur oder einen Bauplaner bestätigt werden muss. In einer weiteren Alternative muss der Installateur oder der Bauplaner selbstständig die alternative Konfiguration aus der Datenbank heraussuchen. Es ist denkbar, dass der Bauplaner, nicht jedoch der Installateur, die Berechtigung hat, die alternative Konfiguration zu bestätigen oder herauszusuchen. Bevorzugt umfasst das elektronische Konfigurationssystem eine Datenbank, in der technische und/oder funktionelle Eigenschaften eines Türsystemtyps mit dem Türsystemtyp verknüpft sind. Mittels des Konfigurationssystem kann der passende Türsystemtyp gefunden werden, insbesondere durch eine Filterung anhand der technischen und/oder funktionellen Eigenschaften.

Bevorzugt ist vorgesehen, dass die Türkomponenten des Türsystems oder die Türkomponenten, die informationstechnisch mit dem Steuergerät verbunden sind, jeweils eine Kennzeichnung umfassen. Es kann sein, dass die Kennzeichnung zumindest nur einmal einer der Türkomponenten des Türsystems zugeordnet ist. Beispielsweise kann es sich bei der Kennzeichnung um eine Busadresse handeln. Alternativ handelt es sich um eindeutige, einmal vergebene Kennzeichnung oder um eine eindeutige Kennzeichnung, die pro Türkomponententyp und/oder pro Datenbank nur einmal vergeben wird, handeln.

Es kann vorgesehen sein, dass das Verfahren den Schritt umfasst, dass die Kennzeichnung der Türkomponenten zumindest teilweise den in der Komponentenaufstellung aufgestellten Türkomponenten oder Türkomponententypen zugeordnet wird. Dieses kann dem Schritt b. entsprechen. Zumindest die Türkomponenten, die mit dem Steuergerät in einer informationstechnischen Verbindung stehen, werden den in der Komponentenaufstellung aufgestellten Türkomponenten oder Türkomponententypen zugeordnet.

Bevorzugt ist vorgesehen, wenn nur eine Türkomponente eines Türkomponententyps in dem Türsystem vorhanden ist, eine automatische Zuordnung der verbauten Türkomponente zu dem Türkomponententyp erfolgt. Dieses kann dem Schritt b. entsprechen. Die automatische Zuordnung wird insbesondere durch das Steuergerät durchgeführt. Die automatische Zuordnung kann die Zuordnung der Busadresse oder der insbesondere eindeutigen Kennzeichnung zu dem Türkomponententyp umfassen.

Bevorzugt nehmen Türkomponenten Positionen innerhalb eines Türsystems ein. Beispielsweise kann die Position "an dem Gangflügel" oder "an der ersten Tür" lauten.

Es kann vorgesehen sein, dass auf dem mobilen Endgerät eine Zuordnung einer verbauten Türkomponente zu einem Installationsort, zu einem Türsystem und/oder zu einer Position erfolgt. Hierzu kann der Installateur eine Kennzeichnung oder ein Erkennungszeichen der Komponenten zu einem Installationsort, zu einem Türsystem und/oder zu einer Position vornehmen. Dazu werden dem Installateur mögliche Installationsorte, mögliche Türsysteme und/oder mögliche Positionen auf dem mobilen Endgerät angezeigt. Der Installateur kann einen Installationsort, ein Türsystem und/oder eine Position auswählen. Die Anzeige kann gleichzeitig oder nacheinander auf dem mobilen Endgerät erfolgen. Das mobile Endgerät hat Kenntnis von der Kennzeichnung oder dem Erkennungszeichen und kann eine Zuordnung vornehmen. Dieses kann dem Schritt b. entsprechen, insbesondere kann das Steuergerät zur Durchführung des Schritts b. dem mobilen Endgerät die Kennzeichnung, das Erkennungszeichen und/oder eine mögliche Position direkt oder indirekt senden.

Es kann vorgesehen sein, dass die Kennzeichnung der Türkomponente oder ein der Kennzeichnung eindeutig zugeordnetes Erkennungszeichen auf dem mobilen Endgerät angezeigt wird. Dieses kann dem Schritt b. entsprechen, wobei insbesondere das Steuergerät dem mobilen Endgerät die Kennzeichnung oder das Erkennungszeichen sendet.

Durch den Empfang einer Auswahl der Kennzeichnung der Türkomponente oder des zugeordneten Erkennungszeichens auf dem mobilen Endgerät wird bevorzugt eine Abgabe eines sinnlich erfahrbaren, insbesondere visuellen, haptischen und/oder akustischen, Zeichens durch die Türkomponente verursacht. Zusätzlich oder alternativ wird die Abgabe eines sinnlich erfahrbaren, insbesondere visuellen, haptischen und/oder akustischen, Zeichens durch eine weitere Türkomponente des Türsystems verursacht, wobei das Zeichen der ausgewählten Türkomponente zuordenbar ist. Somit kann der Installateur auf dem mobilen Endgerät eine Türkomponente auswählen. Durch diese Auswahl wird die ausgewählte Türkomponente oder eine andere Türkomponente, die der ausgewählten Türkomponente zuordenbar ist,veranlasst, ein sinnlich erfahrbares, insbesondere ein visuelles, haptisches und/oder akustisches, Zeichen abzugeben. Hierdurch kann der Installateur eine verbaute Türkomponente eindeutig identifizieren.

Die Abgabe eines sinnlich erfahrbaren, insbesondere eines visuellen, haptischen und/oder akustischen, Zeichens ist z. B. vorgesehen, wenn mehrere Steuergeräte sich im Nahkommunikationsbereich des mobilen Endgeräts befinden. Hierdurch kann dasjenige Steuergerät erkannt werden, das sich in dem zu konfigurierenden Türsystem befindet. Zusätzlich oder alternativ kann die Abgabe eines sinnlich erfahrbaren, insbesondere eines visuellen, haptischen und/oder akustischen, Zeichens vorgesehen sein, wenn das Türsystem zumindest einen Türkomponententyp mehrfach umfasst. Hierdurch kann der Installateur erkennen, welche Türkomponente an welcher Position verbaut worden ist.

Durch die Abgabe des sinnlich erfahrbaren, insbesondere visuellen, haptischen und/oder akustischen, Zeichens ist es insbesondere möglich, dass der Installateur eine Türkomponente erkennt, wenn die Türkomponente bereits an der vorgesehenen Position installiert ist.

Es ist bevorzugt vorgesehen, dass die Türkomponente ein visuelles und/oder akustisches Zeichen mittels eines Anzeigeelements der Türkomponente abgibt. Das Anzeigeelement wird bevorzugt in dem Betrieb des Türsystems von der Türkomponente verwendet, um ein visuelles und/oder akustisches Zeichen abzugeben. Beispielsweise soll ein Leser eine akustisches und/oder visuelles Zeichen in dem erfindungsgemäßen Inbetriebnahmeverfahren abgegeben. Hierzu verwendet der Leser ein Anzeigeelement, das im Betrieb einem Benutzer mitteilt, ob eine Zutrittsberechtigung vorliegt oder nicht. In einem anderen Beispiel soll ein Gefahrenmelder, insbesondere Rauchmelder, oder ein Nottaster ein akustisches und/oder visuelles Zeichen in dem erfindungsgemäßen Inbetriebnahmeverfahren abgegeben. Hierzu verwendet der Gefahrenmelder oder der Nottaster dasselbe Anzeigeelement, mit der der Gefahrenmelder im Betrieb des Türsystems einen Alarm angibt.

Es kann vorgesehen sein, dass die Türkomponente ein visuelles und/oder akustisches Zeichen abgibt, indem die Türkomponente einen Betriebsschritt zumindest teilweise durchführt. Z. B. kann ein motorischer Türantrieb eine dem Türantrieb zugeordnete Tür zumindest teilweise öffnen oder schließen, um das visuelle Zeichen abzugeben.

Es kann vorgesehen sein, dass die Türkomponente ein haptisches Zeichen abgibt, indem die Türkomponente eine elektromechanische Aktion durchführt, beispielsweise kann ein Türöffner eine Schwenkfalle entriegeln oder ein elektromechanischer Beschlag ein Kupplungselement einkuppeln. Der Installateur kann durch eine mechanische Aktion an der Türkomponente, z. B. eine Entriegelung der Tür, das haptische Zeichen erfassen.

Hat der Installateur auf dem mobilen Endgerät eingegeben, dass eine zu der Kennzeichnung und/oder dem Erkennungszeichen zugehörige Türkomponente das sinnlich erfahrbare, insbesondere das visuelle, haptische und/oder akustische, Zeichen abzugeben hat, so empfängt das Steuergerät mit der Sende- und Empfangseinheit einen entsprechenden Befehl von dem mobilen Endgerät. Ist das sinnlich erfahrbare, insbesondere das visuelle, haptische und/oder akustische, Zeichen von dem Steuergerät selber abzugeben, so gibt das Steuergerät daraufhin das sinnlich erfahrbare, insbesondere das visuelle, haptische und/oder akustische, Zeichen ab. Ist das insbesondere das visuelle, haptische und/oder akustische, Zeichen von einer anderen Türkomponente abzugeben, so sendet das Steuergerät einen entsprechenden Befehl über die informationstechnische Verbindung.

Das sinnlich erfahrbare, insbesondere das visuelle, haptische und/oder akustische Zeichen kann von der verbauten Türkomponente abgebbar sein. Eine Kennzeichnung oder ein zugeordnetes Erkennungszeichen einer verbauten Türkomponente des Türsystems kann auf dem mobilen Endgerät angezeigt werden.

Mittels des sinnlich erfahrbaren, insbesondere visuellen, haptischen oder akustischen, Zeichens kann die verbaute Türkomponente einer vorgesehener Türkomponenten des Türsystems zugeordnet werden. Hierzu wird auf dem mobilen Endgerät die Kennzeichnung oder das zugeordnete Erkennungszeichen der ausgewählten Türkomponenten einem Türsystem durch eine Benutzereingabe zugeordnet. Dieses ist insbesondere der Fall, wenn ein Steuergerät einem Türsystem zugeordnet werden soll. Hierzu werden bevorzugt die Installationsorte und/oder Kennzeichnungen von vorgesehenen Türsystemen auf dem mobilen Endgerät angezeigt, so dass der Installateur den Installationsort und/oder die Kennzeichnung auswählen und damit das vorgesehenen Türsystem auswählen kann.

Es kann vorgesehen sein, dass auf dem mobilen Endgerät die Kennzeichnung oder das zugeordnete Erkennungszeichen der ausgewählten Türkomponenten einer vorgesehenen Türkomponente des Türsystems durch den Empfang einer Benutzereingabe zugeordnet wird. Dieses ist insbesondere der Fall, wenn mehrere Türkomponenten desselben Türkomponententyps in dem Türsystem vorgesehen sind. Hierzu wird bevorzugt zumindest eine Position von vorgesehenen Türkomponenten auf dem mobilen Endgerät angezeigt, so dass der Installateur die Position der vorgesehenen Türkomponente auswählen oder bestätigen kann. Die Anzeige von mehreren Positionen kann nacheinander oder gleichzeitig auf dem mobilen Endgerät erfolgen. Bevorzugt werden die Positionen von vorgesehenen Türkomponenten desselben Türkomponententyps auf dem mobilen Endgerät angezeigt.

Bevorzugt ist vorgesehen, dass zumindest die Kennzeichnung einer Türkomponente, insbesondere die Kennzeichnung mehrerer oder aller Türkomponenten, als zu dem Türsystem zugehörig und/oder zu einem Installationsort gehörig in der Recheneinheit hinterlegt wird. Dieses kann dem Schritt b. entsprechen, wobei insbesondere die elektronische Konfiguration eine Kennzeichnung des Türsystems und/oder den Installationsort umfasst.

Vorzugsweise ist in der Recheneinheit die Kennzeichnung einer Türkomponente zusammen mit zumindest einem weiteren Merkmal der Türkomponente hinterlegt. Die elektronische Hinterlegung erfolgt insbesondere vor Schritt a. Bei den weiteren Merkmalen kann es sich z. B. um einen Produktionsstandort und/oder einen Produktionszeitpunkt handeln. Mit der Hinterlegung der Kennzeichnung der verbauten Türkomponente zu dem Türsystem und/oder dem Installationsort ist das zumindest eine weitere Merkmal dem Türsystem und/oder dem Installationsort zugeordnet. Hierdurch kann im Betrieb nachvollzogen werden, welche Türkomponenten wo verbaut sind.

Es kann vorgesehen sein, dass das Steuergerät der Recheneinheit eine Zuordnung der Kennzeichnung der Türkomponenten der Komponentenaufstellung sendet. Zusätzlich oder alternativ kann vorgesehen sein, dass das Steuergerät der Recheneinheit eine Zuordnung der Kennzeichnung der Türkomponenten zu den vorgesehenen Türkomponententypen und/oder Positionen sendet. Die Zuordnung kann in der Recheneinheit hinterlegt werden. Dieses kann dem Schritt b. entsprechen.

Es kann vorgesehen sein, dass das Steuergerät mit der Recheneinheit informationstechnisch, z. B. über ein zweite Bussystem, verbunden ist. Das zweite Bussystem kann insbesondere als ein IP-fähiger Bus, z. B. das Ethernet, ausgestaltet sein. Im Betrieb des Türsystems kann vorgesehen sein, dass das Steuergerät den Betriebszustand der übrigen Türkomponenten des Türsystem kennt und die Betriebszustände der Recheneinheit kommuniziert.

Bevorzugt ist vorgesehen, dass mehrere Türkomponenten eines Türsystems informationstechnisch verbunden sind. Vorzugsweise umfasst die elektronische Konfiguration Sender und/oder Empfänger von Nachrichten, die über die informationstechnische Verbindung gesendet werden. Beispielsweise kann in der elektronischen Konfiguration festgelegt sein, welche Türkomponente von welcher anderen Türkomponente ein Lebenszeichensignal empfängt oder welche Türkomponente von welcher anderen Türkomponente eine Information über einen Zustand empfängt.

Zusätzlich oder alternativ kann die elektronische Konfiguration zumindest teilweise die Abläufe von Betriebsfunktionen umfassen. Bevorzugt sind die Abläufe von Betriebsfunktionen zumindest teilweise als Firmware in dem Steuergerät hinterlegt. Als eine Betriebsfunktion wird ein im Betrieb stets in einer zeitlichen Reihenfolge ablaufender Vorgang, an dem mehrere Türkomponenten beteiligt sind, verstanden. Bevorzugt umfasst eine Betriebsfunktion mehrere Betriebsschritte.

Ein Betriebsschritt kann z. B. ausgebildet sein als eine motorische Türöffnung oder eine motorische Türschließung. Ein Betriebsschritt kann ausgebildet sein, elektrisch ausgelöst, die Tür mittels eines Türschließers zu schließen. Ein Betriebsschritt kann z.B. als eine elektrisch durchgeführte Türentriegelung oder eine elektrisch durchgeführte Türverriegelung ausgebildet sein. Ein Betriebsschritt kann z. B. als ein elektrisches Herstellen einer Voraussetzung für eine manuelle Entriegelung und/oder Verriegelung ausgebildet sein. Ein Betriebsschritt kann z. B. als eine visuelle und/oder akustische Anzeige eines Zustands des Türsystems ausgebildet sein.

Beispielsweise kann die Betriebsfunktion eine motorisches Türöffnen in Zusammenhang mit der Entriegelung zumindest eines Verriegelungselements umfassen. Zum Beispiel kann die Betriebsfunktion ein motorisches Türschließen in Zusammenhang mit einer Verriegelung des Verriegelungselements umfassen. Zum Beispiel kann die Betriebsfunktion ein motorisches Öffnen eines ersten Türflügels und ein anschließendes Öffnen eines zweiten Türflügels derselben oder einer anderen Tür umfassen. Durch die als Firmware abgebildeten Betriebsfunktionen sind auch komplizierte Abläufe mit mehreren Türkomponenten möglich, beispielsweise um eine Fluchtwegsicherung mit einem motorischen Türantrieb oder eine Schleuse zu koordinieren.

Zur Durchführung einer Betriebsfunktion kann auch Firmware in weiteren Steuereinrichtungen des Türsystems, z. B. in einer Antriebssteuerung und/oder in einer Fluchtwegsteuerung, hinterlegt sein. Bevorzugt koordiniert das Steuergerät zumindest teilweise die Steuereinrichtungen des Türsystems.

Bevorzugt wird vor Ort eine Türkomponente, bevorzugt eine Busadresse einer Türkomponente, einem Türkomponententyp und/oder einer Position und/oder einer in der Komponentenaufstellung vorgesehenen Türkomponente zugeordnet. Dieses kann z. B. durch die Zuordnung des Kennzeichens oder des Erkennungszeichens zu der vorgesehenen Türkomponente erfolgen. Hierbei kann die Zuordnung mittels des mobilen Endgeräts insbesondere durch das beschriebene Verfahren, das die Abgabe des sinnlich erfassbaren, insbesondere visuellen, haptischen und/oder akustischen, Zeichens beinhaltet, erfolgen. Somit weiß das Steuergerät und/oder die anderen mit demselben Bussystem verbundenen Türkomponenten, mit welcher Busadresse welche vorgesehene Türkomponente zu adressieren ist. Hierdurch ist es möglich, erst bei der Inbetriebnahme ohne zusätzliche Verkabelung Türkomponenten in eine Betriebsfunktion einzubinden.

Zusätzlich oder alternativ kann die elektronische Konfiguration Parameter zum Betrieb des Türsystems umfassen. Bei den Parametern kann es sich z. B. um eine Öffnungsgeschwindigkeit der Tür, um eine motorische Leistungskurve eines Türantriebs, um eine Offenhaltezeit der Tür, um einen Öffnungsweite der Tür, um einen Öffnungswinkel der Tür, um eine Schließgeschwindigkeit der Tür, um eine Entriegelungszeit eines Verriegelungselements oder eines Entriegelungselements, um eine Überwachungszeit bis zum Auslösen eines Alarms bei geöffneter Tür oder ähnliches handeln.

Es kann sein, dass die Sender und/oder Empfänger von Nachrichten, die Abläufe von Betriebsfunktionen und/oder die Parameter während der Inbetriebnahme änderbar sind. Beispielsweise wird auf dem mobilen Endgerät dem Installateur eine Eingabemöglichkeit angezeigt, in der der Installateur Änderungen vornehmen kann.

Es kann sein, dass das Steuergerät zumindest teilweise Informationen, z. B. Parameter, Sender und/oder Empfänger von Nachrichten und/oder Firmware, der elektronischen Konfiguration an weitere Türkomponenten, insbesondere an weitere Steuereinrichtungen, weiterleitet. Dieses kann dem Schritt b. entsprechen. Die Weiterleitung kann bereits während des Inbetriebnahmeverfahrens oder im Betrieb geschehen.

Zusätzlich oder alternativ kann die elektronische Konfiguration einen Testablauf für das Türsystem, bei dem zur Inbetriebnahme zumindest ein Betriebsschritt und/oder zumindest eine Betriebsfunktion des Türsystems getestet wird, umfassen. Der Testablauf kann vollständig von dem Steuergerät durchgeführt werden. Alternativ wird der Testablauf von dem Steuergerät durchgeführt, wobei das Steuergerät auf das mobilen Endgerät Anweisungen und/oder Informationen sendet und/oder von dem mobilen Endgerät empfängt, so dass der Installateur an der Durchführung oder Abnahme des Testablaufs beteiligt ist. Die Durchführung des Testablaufs kann dem Schritt b. entsprechen.

Vorzugsweise ist vorgesehen, dass zumindest mehrere, insbesondere alle, der Türkomponenten mit einem ersten Bussystem verbunden sind. Bei einer Türkomponenten handelt es sich insbesondere um das Steuergerät. Bei einer zumindest einer weiteren Türkomponente handelt es sich um einen motorischen Türantrieb. Bei zumindest einer weiteren Türkomponente handelt es sich bevorzugt um ein Verriegelungs- oder Entriegelungselement. Besonders bevorzugt sind zumindest ein Türantrieb mit einer Antriebssteuerung, eine Fluchtwegsteuerung einer Fluchtwegsicherung und das Steuergerät mit dem ersten Bussystem verbunden.

Bevorzugt weist das Steuergerät den übrigen Türkomponenten, die mit dem ersten Bussystem verbunden sind, Busadressen zu.

Die elektrische Konfiguration kann aus einer Datenbank mit mehreren fest vorgegebenen elektrischen Konfigurationen von dem Steuergerät empfangbar sein. Die elektronische Konfiguration ist bevorzugt in dem Steuergerät speicherbar, indem vor Schritt a. die Konfiguration einer Kennzeichnung des Türsystems und/oder einem Türsystemtyp und/oder dem Installationsort zugeordnet worden ist. Beispielsweise ist bei der Planung des Gebäudes dem geplanten Türsystem eine insbesondere eindeutige Kennzeichnung zugeordnet worden. Der Installateur kann die eindeutige Kennzeichnung in das mobile Endgerät eingeben, um die elektrische Konfiguration in das Steuergerät herunterzuladen. In einer weiteren Alternative ist jeweils einer elektronischen Konfiguration einem Türsystemtyp zugeordnet. Der Installateur kann den Türsystemtyp in das mobile Endgerät eingeben, um die elektrische Konfiguration in das Steuergerät herunterzuladen. In einer dritten Alternative ist in einer Datenbank der Installationsort mit der elektronischen Konfiguration verknüpft. Der Installateur kann den Installationsort in das mobile Endgerät eingeben, um die elektrische Konfiguration in das Steuergerät herunterzuladen.

In einer weiteren Variante ordnet das Steuergerät oder die Recheneinheit mittels der verbauten Türkomponententypen dem Türsystem eine elektrische Konfiguration zu.

Bevorzugt ist das Steuergerät über ein zweites Bussystem mit einer Recheneinheit verbunden. Das Steuergerät empfängt die elektronische Konfiguration von der Recheneinheit, um die Konfiguration in Schritt a. zu speichern.

Zusätzlich oder alternativ ist das Steuergerät über eine insbesondere kabellose Schnittstelle, insbesondere der Sende- und Empfangseinheit, mit dem mobilen Endgerät, verbunden. Das Steuergerät empfängt die elektronische Konfiguration von dem mobilen Endgerät, um die Konfiguration in Schritt a. zu speichern.

Es kann vorgesehen sein, dass durch das Steuergerät von dem mobilen Endgerät zumindest ein Schlüssel empfangen wird, um in dem ersten Bussystem und/oder in dem zweiten Bussystem verschlüsselt zu kommunizieren. Der Empfang des Schlüssels erfolgt insbesondere vor Schritt a.

Die Aufgabe der Erfindung wird auch durch ein Türsystem mit einem Steuergerät zur Durchführung eines erfindungsgemäßen Verfahrens, insbesondere eines Verfahrens nach einem der Ansprüche 1 bis 15, gelöst. Hierbei kann insbesondere das Steuergerät ein computerlesbares Medium umfassen, auf dem die elektronische Konfiguration und/oder ein Computerprogramm zur Durchführung des Verfahrens speicherbar ist. Das Computerprogramm auf dem Steuergerät kann z. B. die tatsächlich verbauten Türkomponenten mit den vorgesehenen Türkomponenten vergleichen. Das Computerprogramm auf dem Steuergerät kann z. B. den Türkomponenten Busadressen zuweisen. Das Computerprogramm auf dem Steuergerät kann z. B. automatisch die Kennzeichnungen der Türkomponenten den vorgesehenen Türkomponententypen zuordnen. Mittels des Computerprogramms kann das Steuergerät z. B. eine Nachricht an eine Türkomponente senden, damit die Türkomponente ein akustisches oder visuelles Zeichen abgibt.

Das Türsystem umfasst zumindest eine weitere Türkomponente, bevorzugt mehrere weitere Türkomponenten. Bevorzugt sind die weiteren Türkomponenten mit dem Steuergerät informationstechnisch verbunden.

Die Aufgabe der Erfindung wird auch durch eine Türanordnung gelöst. Die Türanordnung umfasst das erfindungsgemäße Türsystem. Zusätzlich umfasst die Türanordnung das mobile Endgerät und/oder die Recheneinheit. Bevorzugt befinden sich das mobile Endgerät und/oder die Recheneinheit in einer informationstechnischen Verbindung mit dem Steuergerät.

Die Aufgabe der Erfindung wird auch durch Computerprogrammprodukt zur Durchführung des Verfahrens nach einem der Ansprüche 1 bis 15 gelöst. Im Rahmen der Erfindung kann vorgesehen sein, dass das Computerprogrammprodukt auf dem Steuergerät elektronisch gespeichert ist. Es kann sein, dass zur Durchführung des erfindungsgemäßen Verfahrens ein Computerprogrammprodukt auf dem Steuergerät und ein Computerprogrammprodukt auf dem mobilen Endgerät gespeichert ist. Hierbei ist insbesondere vorgesehen, dass das Steuergerät und das mobile Endgerät mittels der Computerprogrammprodukte miteinander kommunizieren. Hierbei kann das Computerprogrammprodukt Befehle umfassen, um Informationen an das mobile Endgerät zu senden. Das Computerprogrammprodukt kann Befehle umfassen, um Informationen an das Steuergerät zu senden. Es ist denkbar, dass das Computerprogrammprodukte zur Durchführung des erfindungsgemäßen Verfahrens auf dem Steuergerät, auf dem mobilen Endgerät und auf der Recheneinheit gespeichert sind.

Weitere Einzelheiten und Vorteile der Erfindung sollen nachfolgend anhand des in den Figuren gezeigten Ausführungsbeispiele erläutert werden. Hierbei sind technische Merkmale mit gleicher Funktion in den Figuren mit identischen Bezugszeichen versehen. Hierin zeigt:
- Fig. 1: ein erstes Ausführungsbeispiel eines erfindungsgemäßen Türsystems und einer erfindungsgemäßen Türanordnung,
- Fig. 2: ein zweites Ausführungsbeispiel eines erfindungsgemäßen Türsystems und einer erfindungsgemäßen Türanordnung,
- Fig. 3: ein drittes Ausführungsbeispiel eines erfindungsgemäßen Türsystems und einer erfindungsgemäßen Türanordnung,
- Fig. 4: eine prinzipielles Ablaufskizze eines erfindungsgemäßen Verfahrens,
- Fig. 5: eine prinzipielles Ablaufskizze eines erfindungsgemäßen Verfahrens und
- Fig. 6: eine prinzipielles Ablaufskizze eines erfindungsgemäßen Verfahrens.

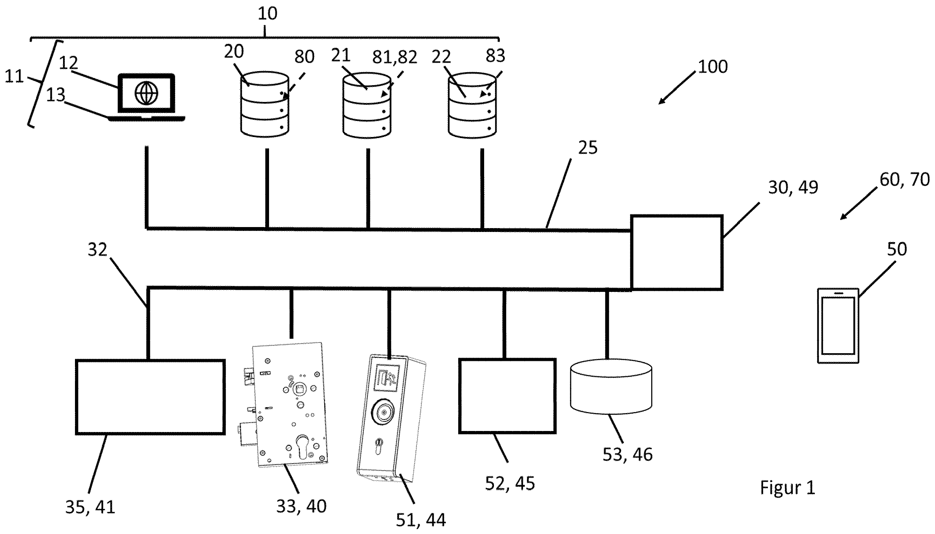

In den Figuren 1 bis 3 sind ein erstes Ausführungsbeispiel, ein zweites Ausführungsbeispiel und ein drittes Ausführungsbeispiel eines erfindungsgemäßen Türsystems 60, 61, 62 und einer erfindungsgemäßen Türanordnung 100 dargestellt. Die erfindungsgemäße Türanordnung 100 umfasst eine Recheneinheit 10. Die Recheneinheit 10 umfasst ein Rechengerät 11, das als ein Personal Computer ausgebildet ist. Das Rechengerät umfasst einen Bildschirm 12 und eine Tastatur 13.

Die Recheneinheit 10 umfasst zumindest einen elektronischen Speicher. Beispielsweise kann es sich hierbei um einen Speicher einer Cloud handeln. In dem Speicher sind eine erste Datenbank 20, eine zweite Datenbank 21 und eine dritte Datenbank 22 hinterlegt. Alternativ und nicht dargestellt, können die die erste und die zweite Datenbank 20, 21 als eine gemeinsame Datenbank ausgebildet sein. Ebenfalls können die zweite und die dritte Datenbank 21, 22 als eine gemeinsame Datenbank ausgebildet sein. In einer weiteren Alternative können die erste und die dritte Datenbank 20, 22 als eine gemeinsame Datenbank ausgebildet sein. In einer weiteren Datenbank sind die erste bis dritte Datenbank 20, 21, 22 in einer gemeinsamen Datenbank integriert.

In einem elektronischen Speicher der Recheneinheit 10 ist ein Konfigurationssystem elektronisch gespeichert. Das Konfigurationssystem ist als Computerprogrammprodukt ausgebildet. Das Konfigurationssystem umfasst die Datenbanken 20, 21, 22.

In den Figuren 1 bis 3 sind unterschiedliche erfindungsgemäße Türsysteme 60, 61, 62 dargestellt. Die Türsysteme 60, 61, 62 sind Teil der erfindungsgemäßen Türanordnung 100. Die Türsystem 60, 61, 62 umfassen jeweils ein Steuergerät 30 als eine erste Türkomponente. Die Türsysteme 60, 61, 62 umfassen jeweils ein erstes Bussystem 32, z. B. einen CAN-Bus.

Die Türsysteme 60, 61, 62 umfassen weitere Türkomponenten. Das erste Türsystem 60 in Figur 1 umfasst beispielhaft einen motorischen Türantrieb 35, ein Motorschloss 33, eine Fluchtwegsteuerung 51 mit einem Nottaster, eine elektromagnetische Türverriegelung 52 und einen Gefahrenmelder, insbesondere einen Rauchmelder 53, als weitere Türkomponenten. Die Türkomponenten 35, 33, 51, 52, 53 haben unterschiedliche Funktionen und funktionelle Eigenschaften. Somit gehören die Türkomponenten 35, 33, 51, 52, 53 unterschiedlichen Türkomponententypen 40, 41, 44, 45, 46 an.

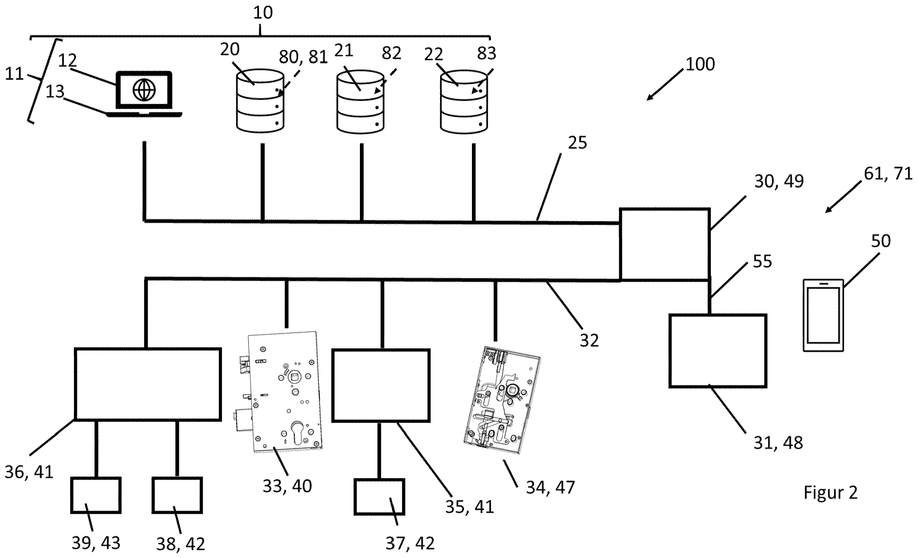

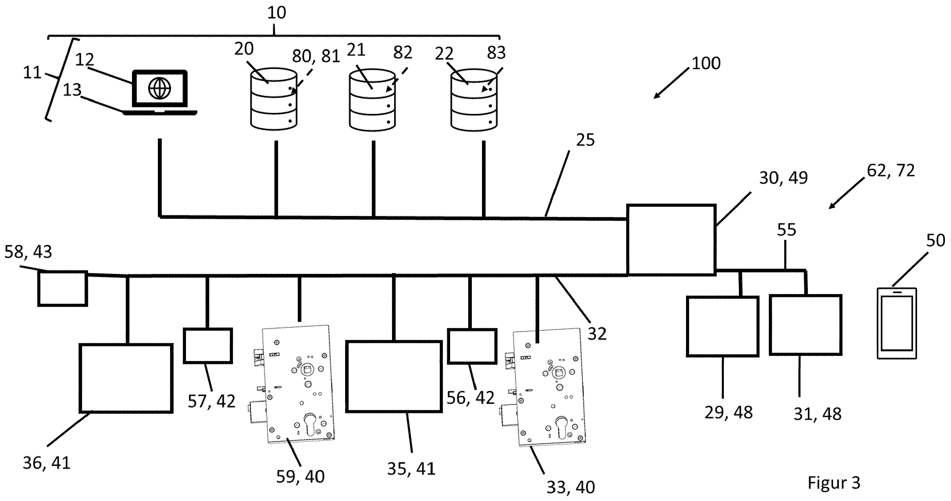

Das zweite Türsystem 61 in Figur 2 und das dritte Türsystem 62 in Figur 3 umfasst jeweils mehrere motorische Türantriebe 35, 36 als Türkomponenten. Die motorischen Türantriebe 35, 36 sind identisch ausgebildet und gehören somit demselben Türkomponententypen 41 an. Des Weiteren umfasst das zweite Türsystem 61 und das dritte Türsystem 62 mehrere Sensoren 37, 38, bzw. 56, 57 als Türkomponenten. Die Sensoren 37, 38 bzw. 56, 57 dienen dazu eine Annäherung einer Person an die Türflügel zu detektieren. Daraufhin können die motorischen Türantriebe 35, 36 die Türflügel in einer zeitlich vorgegebenen Reihenfolge als Funktionsablauf öffnen. Zusätzlich oder alternativ dienen die Signale der Sensoren 37, 38 bzw. 56, 57 dazu, die Tür mittels des Türantriebs 35, 36 anzuhalten, um eine Verletzung der Person zu vermeiden. Die Sensoren 37, 38 bzw. 56, 57 sind identisch ausgebildet und gehören somit demselben Türkomponententypen 42 an.

Des Weiteren ist jeweils ein Programmschalter 39 bzw. 58 als Türkomponente vorgesehen. Mittels des Programmschalters 39, 58 ist durch einen Anwender bestimmbar, ob die Sensoren 37, 38 bzw. 56, 57 bei der Detektion einer Person eine motorische Türöffnung veranlassen oder nicht. Der Programmschalter 39, 58 ist einem eigenen Türkomponententyp 43 zugeordnet.

Die Türantriebe 35, 36 des zweiten Türsystems 61 sind ausgebildet, jeweils an einem Türflügel einer zweiflügeligen Tür angeordnet zu werden. Das zweite Türsystem 61 umfasst ein Motorschloss 34 für einen Standflügel der zweiflügeligen Tür und ein Motorschloss 33 für einen Gangflügel der zweiflügeligen Tür. Die Motorschlösser 33, 34 sind jeweils eigenen Türkomponententypen 40, 47 zugeordnet. Eine weitere Türkomponente des zweiten Türsystems 61 ist als Leser 31 als weiteren Türkomponententyp 48 ausgebildet. Der Leser 31 kann insbesondere kabellos mit einer Karte oder einem Mobiltelefon kommunizieren, um ein Zutrittsattribut zu empfangen. Eine Zutrittsentscheidung wird durch das Steuergerät 30 getroffen.

Die Türantriebe 35, 36 des dritten Türsystems 62 sind ausgebildet, jeweils an einem Türflügel einer Schleuse mit jeweils einer einflügeligen Tür angeordnet zu werden. Das dritte Türsystem 62 umfasst zwei Motorschlösser 33, 59 für den Gangflügel. Die Motorschlösser gehören jeweils zu demselben Türkomponententyp 40. Das Türsystem, 62 umfasst zudem mehrere Leser 29, 31, wobei jeweils ein Leser 29, 31 zur Anordnung an einer Tür der Schleuse vorgesehen ist.

Die Türkomponenten 33, 35, 51, 52, 53 des ersten Türsystems 60 sind mit einem ersten Bussystem 32 verbunden. Einige Türkomponenten 33, 34, 35, 36 des zweiten Türsystems 61 sind mit dem ersten Bussystem 32 verbunden. Andere Türkomponenten 37, 38, 39 des zweiten Türsystems 61 sind nur mittelbar mit dem Steuergerät 30 über einen Türantrieb 35, 36 verbunden. Der Leser 31 ist über ein drittes Bussystem 55, z. B. einem RS485 Bus, mit dem Steuergerät 30 verbunden.

Die Türkomponenten 30, 33, 35, 36, 56, 57, 58, 59 des dritten Türsystems 62 sind mit dem ersten Bussystem 32 verbunden. Die Komponenten 29, 30, 31 sind über das dritte Bussystem 55 verbunden.

Das Steuergerät 30 umfasst eine Sende- und Empfangseinheit zur kabellosen Nahbereichskommunikation mit einem mobilen Endgerät 50. Die erfindungsgemäße Türanordnung umfasst das mobile Endgerät 50.

Dadurch, dass das erste Türsystem 60, das zweite Türsystem 61 und das dritte Türsystem 62 unterschiedliche Türkomponenten umfasst, entsprechen die Türsysteme 60, 61, 62 unterschiedlichen Türsystemtypen 70, 71, 72.

Ein Türsystem 60, 61, 62 ist dadurch gekennzeichnet, dass jedes Türsystem 60, 61, 62 eine gemeinsame elektronische Konfiguration umfasst. Die elektronische Konfiguration umfasst hierbei eine oder mehrere elektronische Dateien. Die Konfiguration 82 ist z. B. als ein Template ausgebildet und auf dem Steuergerät 30 speicherbar. Bevorzugt ist genau eine Konfiguration für jeden Türsystemtyp 70, 71, 72 vorgesehen.

Die elektronische Konfiguration 82 umfasst jeweils eine Komponentenaufstellung, in der die vorgesehenen Türkomponententypen 40, 41, 42, 43, 44, 45, 46, 47, 48, 49 des Türsystems 60, 61, 62, die mit dem Steuergerät 30 informationstechnisch verbunden sind, aufgeführt sind. Sind Türkomponententypen 40, 41, 42, 43, 44, 45, 46, 47, 48, 49 mehrfach vorhanden, so umfasst die Komponentenaufstellung eine Positionsangabe. In dem Ausführungsbespiel der Figur 2 lauten die Positionsangaben "Türantrieb für den Gangflügel", "Türantrieb für den Standflügel". In dem Ausführungsbeispiel der Figur 3 lauten die Positionsangaben "Türantrieb für die erste Tür", "Türantrieb für die zweite Tür", "Sensor für die erste Tür", "Sensor für die zweite Tür", "Motorschloss für die erste Tür", "Motorschloss für die zweite Tür", "Leser für die erste Tür" und "Leser für die zweite Tür".

Die elektronische Konfiguration 82 umfasst jeweils Informationen, welche mit dem ersten oder dritten Bussystem 32, 55 verbundene Türkomponenten welche Nachrichten austauschen. Somit umfasst die elektronische Konfiguration 82 Sender und Empfänger von Nachrichten. Beispielsweise ist vorgesehen, dass der Türantrieb 36 des Türsystems 61 oder der Programmschalter 58 des Türsystems 62 an das Steuergerät 30 meldet, in welchem Betriebsmodus das Türsystem 61, 62 zu betreiben ist. Somit ist der Programmschalter 58 als Sender und das Steuergerät 30 als Empfänger festgelegt. Ein Betriebsmodus hierbei ist ein Automatikbetrieb, in dem bei einer Annäherung einer Person an die Tür, die von dem Sensor 37, 38 detektiert wird, der zu dem Sensor zugehörige Türantrieb 35, 36 die Tür öffnet. Ein weiterer Betriebsmodus ist ein Handbetrieb, bei dem eine Annäherung einer Person an die Tür nicht zu einem motorischen Öffnen der Tür führt. Vielmehr muss sich die Person an dem Leser 31 authentifizieren, damit die Tür geöffnet oder öffenbar wird.

Als ein weiteres Beispiel ist in der elektronischen Konfiguration 82 festgelegt, dass bei einem gültigen Zutrittsattribut, das durch den Leser 31 für die erste Tür des Türsystems 62 empfangen wurde, das Steuergerät 30 veranlasst, dass das Motorschloss 33 für die erste Tür entriegelt wird. Hierzu kann das Steuergerät 30 eine Nachricht an eine Antriebssteuerung des Türantriebs 35 für die erste Tür senden, die daraufhin das Motorschloss 33 für die erste Tür ansteuert. Alternativ kann das Steuergerät 30 eine Nachricht an das Motorschloss 33 für die erste Tür senden. Somit ist für das Steuergerät 30 als Sender und die Antriebssteuerung oder das Motorschloss 33 als Empfänger in der elektronischen Konfiguration festgelegt.

Die elektronische Konfiguration 82 umfasst Abläufe von Betriebsfunktionen. Bei einer Betriebsfunktion sind mehrere Nachrichten und/oder Steuerungen hintereinander in einer festgelegten Reihenfolge vorzunehmen. Die Reihenfolge ist in der elektronischen Konfiguration 82 als Firmware oder als Parameter hinterlegt. Beispielsweise hat sich im Handbetrieb eine Person mittels eines Schlüsseltasters, der in Figur 1 an der Fluchtwegsteuerung 51 angeordnet ist, authentifiziert. Die Fluchtwegsteuerung 51 meldet dem Steuergerät 30 die Authentifizierung und entriegelt die Türverriegelung 52. Das Steuergerät 30 informiert den Türantrieb 35 über die Entriegelung der Türverriegelung 52 und die Zeitdauer der Entriegelung. Die Antriebssteuerung des Türantriebs 35 steuert daraufhin das Motorschloss 33 zur Entriegelung an und öffnet nach der Entriegelung des Motorschlosses 33 motorisch die Tür.

Die elektronische Konfiguration 82 enthält zudem Parameter für das Türsystem 60, 61, 62, z. B. eine Entriegelungszeit der Türverriegelung 52 oder eine Offenhaltezeit für den Türantrieb 35, 36.

Die elektronische Konfiguration 82 enthält zudem ein Steuerprogramm, um einen Testablauf durchzuführen. Bei dem Testablauf werden insbesondere die Betriebsfunktionen für den Betrieb getestet.

Ein Türsystem 60, 61, 62 umfasst jeweils ein gemeinsames Steuergerät 30. Das Steuergerät 30 dient zur Verbindung mit der Recheneinheit 10.

Ein Türsystem 60, 61, 62 kann je nach Türsystemtyp 70, 71, 72 zur Anordnung an einer oder an mehreren Türen vorgesehen sein. In einem weiteren, nicht dargestellten Ausführungsbeispiel dient ein Türsystem beispielsweise zur Anordnung an zwei hintereinander angeordneten zweiflügeligen Türen oder an einen Hotelflur mit vier Zimmern.

Es kann sein, dass eine Türanordnung 100 mehrere Türsysteme 60, 61, 62 umfasst. Die Türsysteme 60, 61, 62 können zu demselben oder unterschiedlichen Türsystemtypen 70, 71, 72 gehören. Die Türsysteme 60, 61, 62 sind bevorzugt über das zweite Bussystem 25 untereinander und/ mit der Recheneinheit 10 verbunden.

Zu Beginn des erfindungsgemäßen Inbetriebnahmeverfahrens sind zwar die Türkomponenten 30, 31, 33, 34, 35, 36, 37, 38, 39, 51, 52, 53, 56, 57, 58, 59 mechanisch an der Tür angeordnet und elektrisch miteinander verbunden, jedoch sind die Türkomponenten 30, 31, 33, 34, 35, 36, 37, 38, 39, 51, 52, 53, 56, 57, 58, 59 noch nicht bereit, wie im Betrieb zusammenzuwirken.

Erfindungsgemäß ist vorgesehen, dass in dem Steuergerät 30 jeweils eine elektronische Konfiguration 82 des Türsystems 60, 61, 62 während des Inbetriebnahmeverfahrens gespeichert wird, mit der zumindest ein Inbetriebnahmeschritt durchgeführt wird. Dadurch, dass eine gemeinsame Konfiguration 82 für ein Türsystem 60, 61, 62 vorgesehen ist, werden Abstimmungsfehler vermieden.

Insbesondere bei der Durchführung von Betriebsfunktionen ist das Verhalten der Türkomponenten 30, 31, 33, 34, 35, 36, 37, 38, 39, 51, 52, 53, 56, 57, 58, 59 aufeinander abgestimmt. Beispielsweise ist die Offenhaltezeit des Türantriebs 35 an eine Entriegelungszeit der Türverriegelung 52 abgestimmt.

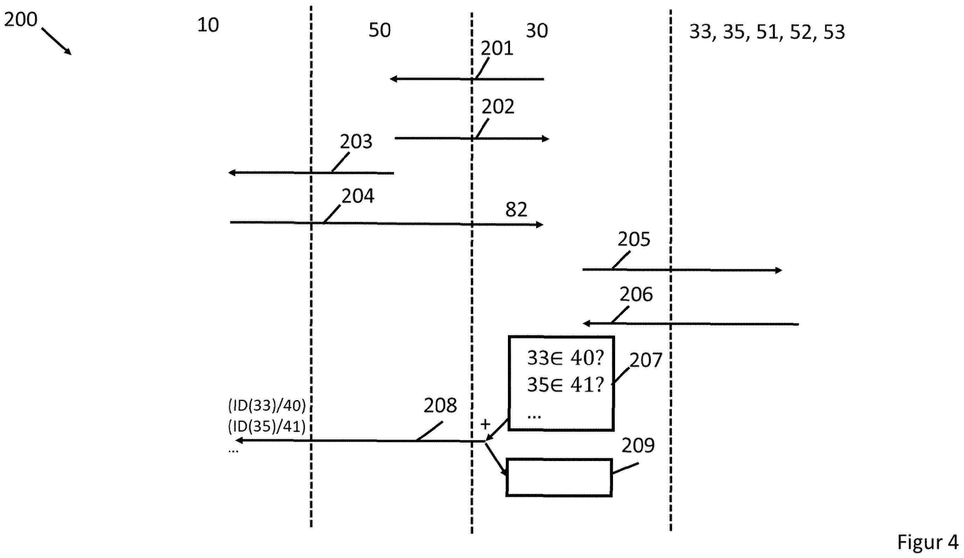

Figur 4 stellt ein Ausführungsbeispiel eines erfindungsgemäßen Inbetriebnahmeverfahrens 200 dar. Das Inbetriebnahmeverfahren 200 ist für das Türsystem 60 des ersten Ausführungsbeispiels der Figur 1 geeignet. Die durch gestrichelte Linien markierte Spalten symbolisieren, in welchem Gerät oder zwischen welchen Geräten der Verfahrensschritt stattfindet. Hierbei ist die erste Spalte der Recheneinheit 10, die zweite Spalte dem mobilen Endgerät 50, die dritte Spalte dem Steuergerät 30 und die vierte Spalte den weiteren Türkomponenten 33, 35, 51, 52, 53 zugeordnet. Eine Kommunikation zwischen den in den Spalten angeordneten Geräten findet über die informationstechnische Verbindung statt, also dem ersten oder zweiten Bussystem 32, 25 oder der kabellosen Nahbereichskommunikation.

Sind mehrere Steuergeräte 30 für mehrere Türsysteme 60, 61, 62 in dem Kommunikationsnahbereich des mobilen Endgeräts 50, so senden die Steuergeräte 30 dem mobilen Endgerät 50 jeweils die Kennzeichnung des Steuergeräts 30, z. B. "314.567" oder "256.397". Die Kennzeichnungen des Steuergeräts oder ein Erkennungszeichen, das der Kennzeichnung zugeordnet ist, z. B. "Steuergerät 1" oder "Steuergerät 2" werden dem Installateur auf dem mobilen Endgerät 50 in einem ersten Verfahrensschritt 201 angezeigt.

Der Installateur kann nun eine Kennzeichnung oder ein Erkennungszeichen auswählen. Darauf empfängt das ausgewählte Steuergerät 30 von dem mobilen Endgerät 50 den Befehl, ein sinnlich erfahrbares, insbesondere visuelles und/oder akustisches, Zeichen abzugeben. Das ausgewählte Steuergerät 30 umfasst ein Leuchtmittel, das nun leuchtet. Die Leuchtzeit kann vorgegeben sein. Dieses entspricht einem zweiten Verfahrensschritt 202. Umfasst das Steuergerät 30 kein Anzeigeelement, so kann das Steuergerät eine weitere Türkomponente 33, 35, 51, 52, 53 desselben Türsystems 60 mit einem Anzeigeelement veranlassen, ein sinnlich erfahrbares Zeichen, insbesondere ein visuelles und/oder akustisches Zeichen, abzugeben. Beispielsweise kann ein Leuchtring um den Nottaster leuchten. Hierbei ist wichtig, dass der Installateur das Zeichen dem Steuergerät 30 zuordnen kann. Hierbei kann eine Anzeige auf dem mobilen Endgerät 30 vorgesehen sein, die den Installateur die Zuordnung ermöglicht, z. B. "Leuchtring um Nottasters zum Steuergerät 1 leuchtet".

Der Installateur sieht nun, an welchem Installationsort das Steuergerät 30 angeordnet ist, z.B. in der Nähe welcher Hotel- oder Bürotür. Dem Installateur liegt ein, insbesondere digitaler, Bauplan vor, in dem die Information angegeben ist, welches Türsystem 60 der Türsysteme 60, 61, 62 und/oder welcher Türsystemtyp 70, 71, 72 an dem Installationsort in Betrieb zu nehmen ist. Hierzu ist an dem Installationsort die eindeutige Kennzeichnung des Türsystems 60, z. B. "Türsystem 156.346" oder ein Türsystemtyp, z. B. "Türsystemtyp 70" auf dem Bauplan angegeben. Der Installateur kann die Kennzeichnung des Türsystems oder den Türsystemtyp 70 in das mobile Endgerät 50 eingeben. Alternativ kann der Installateur den Installationsort auf dem digitalen Bauplan markieren. Die Eingabe des Installateurs wird an die Recheneinheit 10 gesendet. Dieses entspricht einem dritten Verfahrensschritt 203.

Für den vierten Verfahrensschritt 204 sind gibt es mehrere Optionen. Es kann sein, dass die elektronische Konfiguration 82 mit der Kennzeichnung des Türsystems 60 und/oder dem Installationsort in der dritten Datenbank 22 verknüpft vorliegt. In einer anderen Option sind die elektronische Konfiguration mit dem Türsystemtyp 70 in der zweiten Datenbank 21 verknüpft. Das Steuergerät 30 kann nun von der Recheneinheit 10 die zum Türsystem 60 passende elektronische Konfiguration 82 empfangen. Hierzu kann das Steuergerät 30 mit der Recheneinheit 10 über das zweite Bussystem 25 kommunizieren, wie in Figur 4 dargestellt. Hierbei kann es sein, dass zunächst das Steuergerät 30 von dem mobilen Endgerät einen Schlüssel zur Verschlüsselung der Nachrichten für das erste und/oder zweite Bussystem 25, 32 empfängt, so dass das Steuergerät 30 und die Recheneinheit 10 verschlüsselt miteinander kommunizieren können. Fehlt das zweite Bussystem 25, so kann zunächst das mobile Endgerät 50 die elektronische Konfiguration 82 empfangen und anschließend an das Steuergerät 30 weiterleiten. Der vierte Verfahrensschritt 204 entspricht dem Schritt a. des erfindungsgemäßen Verfahrens 200.

In einem fünften Verfahrensschritt 205 sucht das Steuergerät 30 nach weiteren Türkomponenten 33, 35, 51, 52, 53 des Türsystems 60, die mit dem ersten Bussystem 32 verbunden sind. Für jede gefundene weitere Türkomponente 33, 35, 51, 52, 53 vergibt das Steuergerät 30 eine Busadresse für das erste Bussystem 32 in einem Verfahrensschritt 205.

Jede weitere mit dem ersten Bussystem 32 verbundenen Türkomponenten 33, 35, 51, 52, 53 des Türsystems 60 senden dem Steuergerät 30 die Kennzeichnung der jeweiligen Türkomponente 33, 35, 51, 52, 53 und den Türsystemtyp 40, 41, 44, 45, 46 der jeweiligen Türkomponente 33, 35, 51, 52, 53 in einem Verfahrensschritt 206.

In einem Verfahrensschritt 207 vergleicht das Steuergerät 30 die Türsystemtyp 40, 41, 44, 45, 46 der jeweiligen Türkomponente 33, 35, 51, 52, 53 mit der Komponentenaufstellung.

Stimmen die verbauten Türkomponententypen 40, 41, 44, 45, 46 mit den vorgesehenen Türkomponententypen 40, 41, 44, 45, 46 überein, was in Figur 4 durch ein "+" dargestellt ist, so wird mit Schritt 208 weiterverfahren. In dem Schritt 208 ordnet das Steuergerät 30 automatisch die Kennzeichnungen der Türkomponenten 30, 33, 35, 51, 52, 53 den vorgesehenen Türkomponententypen 40, 41, 44, 45, 46, 49 zu. Hierbei berücksichtigt das Steuergerät 30 die eigene Kennzeichnung des Steuergeräts 30. Ferner wird eine erste Funktionsprüfung der Türkomponenten 40, 41, 44, 45, 46 durchgeführt. Wird die Funktionsprüfung mit Erfolg abgeschlossen, so sendet das Steuergerät 30 an die Recheneinheit 10 die Zuordnung der Kennzeichnungen der verbauten Türkomponenten 30, 33, 35, 51, 52, 53 zu den Türkomponententypen 40, 41, 44, 45, 46, 49. In Figur 4 ist die Kennzeichnung hierzu mit ID abgekürzt.

In der Recheneinheit 10 wird die Zuordnung in der dritten Datenbank 22 gespeichert. Bei der Herstellung oder dem Einkauf der Türkomponenten 30, 33, 35, 51, 52, 53 wurde zuvor bereits zu den Kennzeichnungen der Türkomponenten 30, 33, 35, 51, 52, 53 weitere Merkmale der Türkomponente in der Recheneinheit 10 gespeichert, im Falle der Herstellung sind dieses Produktionsort und Produktionsdatum, im Falle des Zukaufs können die weiteren Merkmale z. B. die Herstellfirma und die Lieferungsnummer umfassen. In der Recheneinheit 10 ist zudem der digitale Bauplan gespeichert, in dem die Information angegeben ist, welches Türsystem 60 der Türsysteme 60, 61, 62 an dem Installationsort in Betrieb zu nehmen ist. Hierzu ist die Kennzeichnung des Türsystems 60 mit dem Installationsort auf dem digitalen Bauplan verknüpft. Die Information der Kennzeichnungen der Türkomponenten 30, 33, 35, 51, 52, 53 wird nun mit der Kennzeichnung des Türsystems 60 und/oder dem Installationsort verknüpft. Hierdurch lassen sich die weiteren Merkmale der Türkomponenten 30, 33, 35, 51, 52, 53 mit dem Installationsort verknüpfen.

In einem Schritt 209 sendet das Steuergerät nun Informationen an die weitere Türkomponenten 33, 35, 51. Die Informationen können Sender und Empfänger von Nachrichten, der Abläufe von Betriebsfunktionen und/oder der Parameter umfassen. Danach kann sich nun der Testablauf anschließen.

Dadurch dass in dem Verfahrensschritt 206 die Türkomponenten 33, 35, 51, 52, 53 mit den soeben vergebenen Busadressen den jeweiligen Türkomponententyp 40, 41, 44, 45, 46 dem Steuergerät 30 melden, weiß das Steuergerät 30 welche Türkomponente 33, 35, 51, 52, 53 in welchen Betriebsschritt welcher Betriebsfunktion mit welcher Busadresse anzusteuern ist. Dadurch, dass die Betriebsfunktionen als Firmware vorliegen und die Türkomponenten 33, 35, 51, 52, 53 über das erste Bussystem 32 verbunden sind, lassen sich auch komplexe Betriebsfunktionen realisieren.

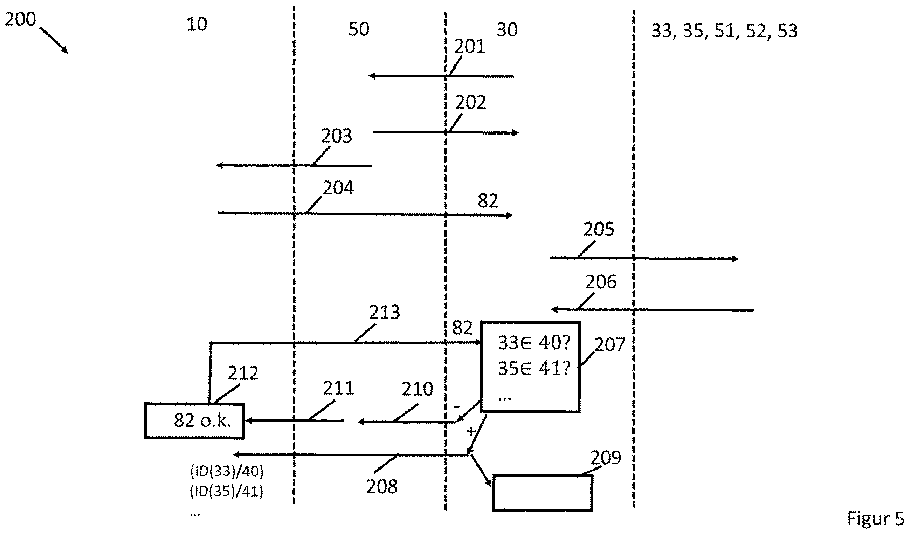

In Figur 5 ist das Inbetriebnahmeverfahren 200 für das Türsystem 60 des ersten Ausführungsbeispiels der Figur 1 erneut dargestellt. Hierbei wird auf die Beschreibung zu Figur 4 verwiesen. Im Unterschied zu dem Verfahren der Figur 4, stimmen in dem Verfahrensschritt 207 die verbauten Türkomponententypen 40, 41, 42, 43, 44, 45, 46, 47 nicht mit der Komponentenaufstellung überein, was in Figur 5 durch ein "-" gekennzeichnet ist. Hierdurch wird in der in Figur 5 dargestellten Ausführungsvariante stets das Inbetriebnahmeverfahren mit der gespeicherten Konfiguration abgebrochen. Dieses ist durch die Firmware auf dem Steuergerät 30 vorgegeben. Beispielsweise ist anstelle des Motorschlosses 33 ein Einsteckschloss ohne Motor eingebaut worden.

Der Installateur erhält in einem Schritt 210 eine entsprechende Mitteilung auf dem mobilen Endgerät 50. Der Installateur kann entscheiden oder einem Bauplaner zur Entscheidung vorlegen, ob das Inbetriebnahmeverfahren mit den verbauten Türkomponenten weitergeführt werden soll oder ob zuerst die fehlende Türkomponente installiert oder die falsche Türkomponente ersetzt werden soll. Möchte der Installateur oder der Bauplaner das Verfahren mit den verbauten Türkomponenten weiterführen, so kann der Installateur das Herunterladen einer passenden Konfiguration 82 für die verbauten Türkomponenten 35, 51, 52, 53 in einem Schritt 211 anfordern. Hierzu kann das Steuergerät 30 oder das mobile Endgerät 50 der Recheneinheit 10 die tatsächlich verbauten Türkomponenten 35, 51, 52, 53 mitteilen. Es kann sein, dass das Konfigurationssystem dem Installateur oder dem Bauplaner einen Vorschlag unterbreitet, welcher Türsystemtyp 70, 71, 72 nun vorliegt und welche Konfiguration 82 dementsprechend auf dem Steuergerät 30 zu speichern ist. In einem Schritt 212 wird die alternative Konfiguration 82, insbesondere von einem Bauplaner an dem Rechengerät 11, bestätigt.

In einer Variante des Verfahrens 200 hat nur der Bauplaner die Berechtigung zu entscheiden, ob das Inbetriebnahmeverfahren mit der fehlenden oder falschen Türkomponente weitergeführt werden soll oder nicht und/oder welcher Türsystemtyp 70, 71, 72 den verbauten Türkomponenten 35, 51, 52, 53 entspricht oder ob das Inbetriebnahmeverfahren mit dem von dem Konfigurationssystem vorgeschlagenen Konfiguration 82 weitergeführt werden soll.

Konnte eine alternative Konfiguration 82 gefunden werden, so wird die alternative Konfiguration in einem Schritt 213 auf dem Steuergerät 30 gespeichert und mit Schritt 207 fortgefahren. Fällt nun der Vergleich in Schritt 207 positiv aus, so schließen sich die Schritte 208 und 209, wie zu Figur 4 beschrieben, an.

Zu dem Ablauf in Figur 5 ist eine Alternative denkbar: Stimmen in dem Verfahrensschritt 207 die verbauten Türkomponententypen 40, 41, 42, 43, 44, 45, 46, 47 nicht mit der Komponentenaufstellung überein, so erhält in einer Ausführungsvariante der Installateur in einem Schritt 211 eine entsprechende Mitteilung auf dem mobilen Endgerät 50. Dem Installateur und/oder dem Bauplaner wird jedoch freigestellt, dass Inbetriebnahmeverfahren 200 mit der gespeicherten Konfiguration 82 fortzuführen. Dieses kann vorgesehen sein, wenn z. B. eine neuere Version einer Türkomponente verbaut worden ist. Das Konfigurationssystem oder das Steuergerät 30 können dem Installateur oder dem Bauplaner vorschlagen, das Türsystem 60 mit einem eingeschränkten Türkomponentenumfang in Betrieb zu nehmen. Es kann sein, dass nur der Bauplaner die Berechtigung hat, die Fortführung des Inbetriebnahmeverfahrens mit der gespeicherten Konfiguration weiterzuführen. Auch in dieser Ausführungsvariante kann für festgelegte Abweichungen vorgesehen sein, dass Inbetriebnahmeverfahren mit der gespeicherten Konfiguration abzubrechen.

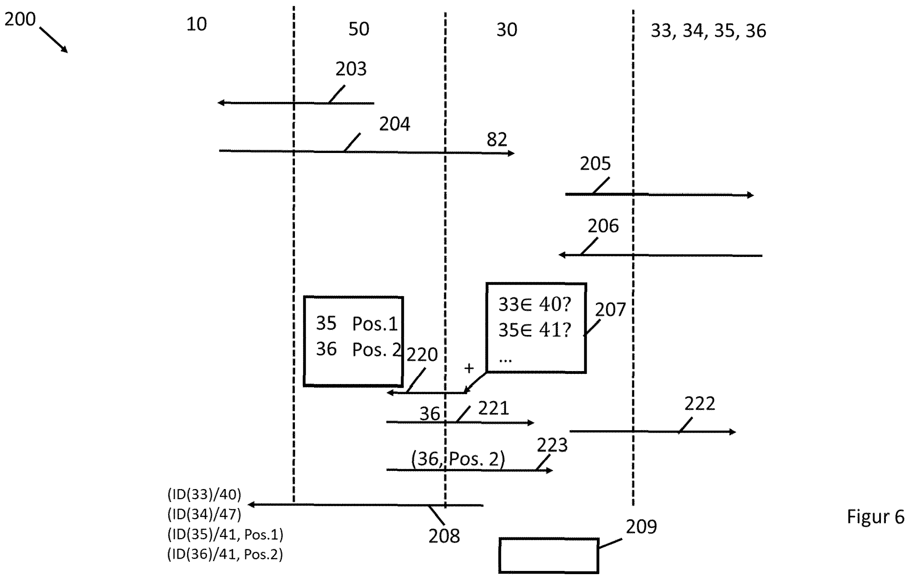

Figur 6 stellt ein Ausführungsbeispiel eines erfindungsgemäßen Inbetriebnahmeverfahrens 200 dar. Das Inbetriebnahmeverfahren 200 ist für die Türsysteme 61, 62 des zweiten und dritten Ausführungsbeispiel der Figuren 2 und 3 geeignet. Falls Schritte identisch oder analog zu den Schritten in den Figuren 4 oder 5 sind, so wird auf die Beschreibung zu den Figuren 4 und 5 verwiesen. Es kann sein, dass auch bei dem Verfahren 200 der Figur 6 mehrere Steuergeräte in Kommunikationsreichweite zu dem mobilen Endgerät 50 sich befinden und somit die Schritte 201 und 202 stattfinden. Beispielhaft wird aber angenommen, dass sich nur ein Steuergerät 30 in Kommunikationsreichweite befindet, so dass das Verfahren 200 der Figur 6 mit den Schritten 203 bis 206 startet.

Hierbei werden bei dem Türsystem 61 der Figur 2 in Schritt 205 nur diejenigen Türkomponenten 33, 34, 35, 36, die mit dem ersten Bussystem 32 verbunden sind, eine Busadresse zugeordnet. In Schritt 206 senden nur die mit dem ersten Bussystem 32 verbundenen Türkomponenten 33, 34, 35, 36 die Kennzeichnung der jeweiligen Türkomponente 33, 34, 35, 36 und den Türsystemtyp 40, 41, 47 der jeweiligen Türkomponente 33, 34, 35, 36. In einem Verfahrensschritt 207 vergleicht das Steuergerät 30 die Türsystemtyp 40, 41, 47 der jeweiligen Türkomponente 33, 34, 35, 36 mit der Komponentenaufstellung. Stimmen die Komponentenaufstellung nicht mit den verbauten Türkomponententypen und deren Anzahl überein, so wird, wie in Figur 5 weiter mit Schritt 210 verfahren (nicht dargestellt).

Stimmen die verbauten Türkomponententypen mit den vorgesehenen Türkomponententypen überein, was in Figur 6 durch ein "+" dargestellt ist, so sind nun die mehrfach vorhandenen Türkomponenten 35, 36, die mit dem ersten Bussystem 32 verbunden sind, einer Position zuzuordnen. In dem Türsystem 61 sind dieses die Türantriebe 35, 36, von denen ein Türantrieb 35 die Position "am Standflügel" und ein Türantrieb 36 die Position "am Gangflügel" innehat.

Daher werden in dem nächsten Schritt 220 die Kennzeichnungen der Türantriebe 35, 36 oder ein Erkennungszeichen, das der Kennzeichnung zugeordnet ist, z. B. "Türantrieb 1" oder "Türantrieb 2" dem Installateur auf dem mobilen Endgerät 50 angezeigt, nachdem diese Angaben von dem Steuergerät 30 an das mobile Endgerät 50 gesendet wurden. Zudem werden dem Installateur auf dem mobilen Endgerät 50 zumindest eine der Positionen der Türantriebe 35, 36 "am Standflügel" und "am Gangflügel" angezeigt. Dieses wird in Figur 6 als "Pos. 1" und "Pos. 2" schematisch dargestellt.

Der Installateur kann nun eine Kennzeichnung oder ein Erkennungszeichen auswählen, z. B. für den Türantrieb 36. Darauf empfängt das ausgewählte Steuergerät 30 von dem mobilen Endgerät 50 in einem Schritt 221 den Befehl, dass der ausgewählte Türantrieb 36 ein sinnlich erfahrbares, insbesondere visuelles und/oder akustisches, Zeichen abzugeben hat. Das Steuergerät 30 informiert den Türantrieb 36 über den Befehl. Daraufhin gibt der Türantrieb 36 in einem Schritt 222 ein visuelles und/oder akustisches Zeichen ab. Hierzu kann der Türantrieb 36 ein Zeichen durch Mittel setzen, die der Türantrieb 36 auch im Betrieb verwendet. Beispielsweise kann der Türantrieb 36 an der Tür ruckeln oder die Tür ein Stück bewegen.

Der Installateur sieht nun, an welcher Position der ausgewählte Türantrieb 36 angeordnet ist, in diesem Fall am Gangflügel. Auf dem mobilen Endgerät 50 kann der Installateur die korrekte Position eingeben. Das mobile Endgerät 50 übermittelt dem Steuergerät 30 die korrekte Position "am Gangflügel" (Pos. 2) und das Kennzeichen des ausgewählten Türantriebs 36 in einem Schritt 223. Optional können die 221 bis 223 für den anderen Türantrieb wiederholt werden. Alternativ kann das Steuergerät den Türantrieb 35 nach dem Ausschlussprinzip dem Standflügel zuordnen.

In dem nächsten Schritt 208 werden dann die Zuordnungen Kennzeichnung der Türkomponenten, 33, 34, 35, 36 zu den Türkomponententypen 40, 41, 47 und deren Position "Pos" von dem Steuergerät 30 an die Recheneinheit 10 gesendet. In einem Schritt 209 sendet das Steuergerät nun Informationen an die weitere Türkomponenten 33, 34, 35, 36. Die Informationen können Sender und Empfänger von Nachrichten, der Abläufe von Betriebsfunktionen und/oder der Parameter. Danach kann sich nun der Testablauf anschließen.

In einer nicht dargestellten Alternative umfasst die Komponentenaufstellung die nicht mit den ersten Bussystem verbundenen Türkomponenten 37, 38, 39. Im Schritt 206 wird das Vorhandensein derjenigen Türkomponenten 37, 38, 39, die nicht mit dem ersten Bussystem 32 verbunden sind, dem Steuergerät 30 mitgeteilt. Hierbei melden die mit den Türkomponenten 37, 38, 39 verbundenen Türantriebe 35, 36 das Vorhandensein der Türkomponenten 37, 38, 39. Hierzu haben die Türantriebe 35, 36 zuvor überprüft, ob die Türkomponenten 37, 38, 39 angeschlossen sind. In einer weiteren Alternative sendet das Steuergerät 30 eine Anfrage an das mobile Endgerät 50, damit der Installateur über eine Eingabe an dem mobilen Endgerät 50 das Vorhandensein der Türkomponenten 37, 38, 39 bestätigt oder eine Handlung durchführt, die es dem Türantrieb 35, 36 ermöglicht, das Vorhanden Sein der Türkomponenten 37, 38, 39 festzustellen.

Für das Türsystem 62 aus Figur 3 ergibt sich ein ähnlicher Ablauf wie für das Türsystem 61 beschrieben. Da jedoch drei Türkomponententypen 40, 41, 42 mehrfach vorhanden sind, werden die Schritte 221, 222 für jede der Türkomponenten 34, 35, 36, 56, 57, 59 durchgeführt. Somit werden die Türkomponenten 34, 35, 36, 56, 57, 59 den Türkomponententypen mit den Positionsangaben "Türantrieb für die erste Tür", "Türantrieb für die zweite Tür", "Sensor für die erste Tür", "Sensor für die zweite Tür", "Motorschloss für die erste Tür", "Motorschloss für die zweite Tür" zugeordnet.

In der Figur 6 nicht dargestellt ist, dass für das zweite oder dritte Türsystem 61, 62 und für das dritte Bussystem 55 anstelle des Schritts 205 der folgende Schritt durchgeführt wird: Das Steuergerät 30 sucht im Bussystem 55 nach vorhandenen Busadresse. Zu jeder gefundenen Busadresse sendet die zumindest eine Türkomponente 29, 31 dem Steuergerät 30 die Kennzeichnung der jeweiligen Türkomponente 29 bzw. 31 und den Türsystemtyp 48 in einem Verfahrensschritt 206.

In einem Verfahrensschritt 207 vergleicht das Steuergerät 30 den Türsystemtyp 48 der jeweiligen zumindest einen Türkomponente 29, 31 mit der Komponentenaufstellung.

Im Schritt 208 wird die Kennzeichnung der Türkomponenten 29, 31 zusammen mit dem Türkomponententyp 48 ebenfalls an die Recheneinheit 10 übermittelt. Für das dritte Türsystem 62 müssen zudem die Schritte 220, 221, 222, 223 durchgeführt. In dem Schritt 208 werden die Kennzeichnungen der Leser 29, 31 zusammen mit dem Türkomponententyp 48 und der Position "an der ersten Tür" bzw. "an der zweiten Tür" übermittelt.

Dadurch dass in dem Verfahrensschritt 206 die Türkomponenten 33, 34, 35, 36, 56, 57, 58, 59 mit den soeben vergebenen Busadressen den jeweiligen Türkomponententyp 40, 41, 42 43, 47 dem Steuergerät 30 melden und in dem Verfahrensschritt 223 eine Zuordnung zu einer Position erfolgt, weiß das Steuergerät 30 welche Türkomponente 33, 34, 35, 36, 56, 57, 58, 59 in welchen Betriebsschritt welcher Betriebsfunktion mit welcher Busadresse anzusteuern ist. Dadurch, dass die Betriebsfunktionen als Firmware vorliegen und die Türkomponenten 33, 35, 51, 52, 53 über das erste Bussystem 32 verbunden sind, lassen sich auch komplexe Betriebsfunktionen realisieren. Dadurch, dass für die Türkomponenten 29, 31 des dritten Bussystems 55 ebenfalls in einem Schritt 223 eine Zuordnung zu einer Position "an der ersten Tür" und "an der zweiten Tür" erfolgt, lassen sich die Leser 29, 31 in die Betriebsfunktionen einbinden. Dem Steuergerät 30 ist bekannt, mit welcher Busadresse welcher Leser 29, 31 zu adressieren ist. Dem Steuergerät 30 ist bekannt, welcher Türantrieb, welches Motorschloss, welcher Sensor und welcher Leser an welcher Tür angeordnet sind und daher funktional zusammenwirken.

In der ersten Datenbank können die unterschiedlichen Türsystemtypen 70, 71, 72 funktionellen und/oder technischen Eigenschaften und/oder Schaltplänen zugeordnet sein.

Als Inbetriebnahmeschritt gemäß Schritt b. des erfindungsgemäßen Verfahrens kann jeder der Schritte 205, 206, 207, 208 209, 220, 221, 222 oder 223 angesehen werden. Hierbei kann es sein, dass der Inbetriebnahmeschritt b. als firmwareimplementiert mittels des Steuergeräts 30 durchgeführt wird. Dieses gilt insbesondere für die Schritte 205, 206, 206, 208, 209. Ferner kann es sein, dass der Inbetriebnahmeschritt b. eine elektronische Kommunikation zwischen dem mobilen Endgerät 50 und dem Steuergerät 30 erfordert. Somit wird der Inbetriebnahmeschritt firmware- bzw. softwareimplementiert auf den Geräten 30, 50 durchgeführt. Dieses gilt für die Schritte 220, 221 und 223, wobei teilweise eine Eingabe in das mobile Endgerät 50 erforderlich ist. Der Schritt 222 wird innerhalb des Türsystems 60, 61, 62 durch das Steuergerät 30 und eine weitere Türkomponente durchgeführt.

## Patentansprüche

1. Verfahren (200) zur Inbetriebnahme eines Türsystems (60, 61, 62), wobei das Türsystem (60, 61, 62) mehrere Türkomponenten (30, 31, 33, 34, 35, 36, 37, 38, 39, 51, 52, 53, 56, 57, 58, 59) aufweist, wobei zumindest eine Türkomponente (30, 31, 33, 34, 35, 36, 37, 38, 39, 51, 52, 53, 56, 57, 58, 59) als ein Steuergerät (30) ausgebildet ist, wobei das Verfahren (200) die folgenden Schritte umfasst:
c. Speichern einer elektronischen Konfiguration (82) des Türsystems (60, 61, 62) in dem Steuergerät (30),
d. Durchführung zumindest eines Inbetriebnahmeschritts mittels der elektronischen Konfiguration (82).

2. Verfahren (200) nach Anspruch 1, wobei die elektronische Konfiguration eine Komponentenaufstellung zumindest über vorgesehene Türkomponententypen (40, 41, 42, 43, 44, 45, 46, 47, 48, 49) des Türsystems (60, 61, 62) und/oder über vorgesehenen Türkomponenten (30, 31, 33, 34, 35, 36, 37, 38, 39, 51, 52, 53, 56, 57, 58, 59) des Türsystems (60, 61, 62) umfasst, wobei das Steuergerät (30) zumindest Kenntnis von den verbauten Türkomponententypen (40, 41, 42, 43, 44, 45, 46, 47, 48, 49) oder den verbauten Türkomponenten (30, 31, 33, 34, 35, 36, 37, 38, 39, 51, 52, 53, 56, 57, 58, 59) hat, die in informationstechnischer Verbindung mit dem Steuergerät (30) stehen.

3. Verfahren (200) nach einem der vorhergehenden Ansprüche, wobei eine Vorgabe elektronisch hinterlegt ist, wie bei einer Abweichung der Komponentenaufstellung von den verbauten Türkomponententypen (40, 41, 42, 43, 44, 45, 46, 47, 48, 49) oder den verbauten Türkomponenten (30, 31, 33, 34, 35, 36, 37, 38, 39, 51, 52, 53, 56, 57, 58, 59) das Inbetriebnahme-Verfahren (200) weiterzuführen ist, insbesondere
wobei die Vorgabe, wie das Inbetriebnahme-Verfahren (200) weiterzuführen ist, in Abhängigkeit von der Art der Abweichung eine der folgenden Optionen entspricht:
• die Aufnahme eines Betriebs des Türsystems (60, 61, 62) ist elektronisch verhindert,
• die Aufnahme eines Betriebs des Türsystems (60, 61, 62) erfolgt mit einem eingeschränktem Türkomponentenumfang
• die Aufnahme eines Betriebs des Türsystems (60, 61, 62) erfolgt wie vorgesehen.

4. Verfahren (200) nach einem der vorhergehenden Ansprüche, wobei, wenn die Fortführung des Inbetriebnahme-Verfahrens (200) durch die Abweichung verhindert ist, von einem Türsystemtyp (70, 71, 72) zu einem alternativen Türsystemtyp (70, 71, 72), das den verbauten Türkomponententypen (40, 41, 42, 43, 44, 45, 46, 47, 48, 49) oder den verbauten Türkomponenten (30, 31, 33, 34, 35, 36, 37, 38, 39, 51, 52, 53, 56, 57, 58, 59) entspricht, gewechselt wird, wobei Schritt a. mit der elektronischen Konfiguration (82) des alternativen Türsystemtyps (70, 71, 72) wiederholt wird, wobei jedem Türsystemtyp (70, 71, 72) eine elektronische Konfiguration zugeordnet ist.

5. Verfahren (200) nach einem der vorhergehenden Ansprüche, wobei die Türkomponenten (30, 31, 33, 34, 35, 36, 37, 38, 39, 51, 52, 53, 56, 57, 58, 59) des Türsystems (60, 61, 62) jeweils eine Kennzeichnung, insbesondere eine eindeutige, einmal vergebene Kennzeichnung, umfassen, wobei zumindest die Kennzeichnung einer Türkomponente (30, 31, 33, 34, 35, 36, 37, 38, 39, 51, 52, 53, 56, 57, 58, 59), insbesondere die Kennzeichnung mehrerer oder aller Türkomponenten (30, 31, 33, 34, 35, 36, 37, 38, 39, 51, 52, 53, 56, 57, 58, 59), als zu dem Türsystem (60, 61, 62) zugehörig in einer Recheneinheit (10) hinterlegt wird.

6. Verfahren (200) nach einem der vorhergehenden Ansprüche, wobei, wenn nur eine Türkomponente (30, 31, 33, 34, 35, 36, 37, 38, 39, 51, 52, 53, 56, 57, 58, 59) eines Türkomponententyps (40, 41, 42, 43, 44, 45, 46, 47, 48, 49) in dem Türsystem (60, 61, 62) vorhanden ist, eine automatische Zuordnung der verbauten Türkomponente (30, 31, 33, 34, 35, 36, 37, 38, 39, 51, 52, 53, 56, 57, 58, 59), insbesondere der eindeutige, für den Türkomponententyp (40, 41, 42, 43, 44, 45, 46, 47, 48, 49) einmal vergebener Kennzeichnung, zu dem Türkomponententyp (40, 41, 42, 43, 44, 45, 46, 47, 48, 49) erfolgt.

7. Verfahren (200) nach einem der vorhergehenden Ansprüche, wobei die Türkomponenten (30, 31, 33, 34, 35, 36, 37, 38, 39, 51, 52, 53, 56, 57, 58, 59) des Türsystems (60, 61, 62) jeweils eine Kennzeichnung, insbesondere eine eindeutige Kennzeichnung, umfassen, wobei die Kennzeichnung der Türkomponente (30, 31, 33, 34, 35, 36, 37, 38, 39, 51, 52, 53, 56, 57, 58, 59) oder ein Erkennungszeichen der Türkomponente (30, 31, 33, 34, 35, 36, 37, 38, 39, 51, 52, 53, 56, 57, 58, 59) auf einem mobilen Endgerät (50), angezeigt wird, wobei durch Empfang einer Auswahl der Kennzeichnung der Türkomponente (30, 31, 33, 34, 35, 36, 37, 38, 39, 51, 52, 53, 56, 57, 58, 59) auf dem mobilen Endgerät (50) eine Abgabe eines sinnlich erfahrbaren, insbesondere,visuellen, haptischen und/oder akustischen, Zeichens durch die Türkomponente (30, 31, 33, 34, 35, 36, 37, 38, 39, 51, 52, 53, 56, 57, 58, 59) oder eines der ausgewählten Türkomponente (30, 31, 33, 34, 35, 36, 37, 38, 39, 51, 52, 53, 56, 57, 58, 59) zuordnenbares Zeichen verursacht wird.

8. Verfahren (200) nach einem der vorhergehenden Ansprüche, wobei zumindest teilweise eine Kennzeichnung einer verbauten Türkomponente (30, 31, 33, 34, 35, 36, 37, 38, 39, 51, 52, 53, 56, 57, 58, 59) des Türsystems (60, 61, 62) auf einem mobilen Endgerät (50), angezeigt wird, wobei ein sinnlich erfahrbares, insbesondere visuelles, haptisches und/oder akustisches, Zeichen von der verbauten Türkomponente (30, 31, 33, 34, 35, 36, 37, 38, 39, 51, 52, 53, 56, 57, 58, 59) oder zur verbauten Türkomponente (30, 31, 33, 34, 35, 36, 37, 38, 39, 51, 52, 53, 56, 57, 58, 59) zuordenbar abgebbar ist, wobei mittels des sinnlich erfahrbaren, insbesondere visuellen, haptischen oder akustischen, Zeichens die verbaute Türkomponente (30, 31, 33, 34, 35, 36, 37, 38, 39, 51, 52, 53, 56, 57, 58, 59) einer vorgesehener Türkomponenten (30, 31, 33, 34, 35, 36, 37, 38, 39, 51, 52, 53, 56, 57, 58, 59) des Türsystems (60, 61, 62) zugeordnet wird, indem auf dem mobilen Endgerät (50) die Kennzeichnung oder ein Erkennungszeichen der ausgewählten Türkomponenten (30, 31, 33, 34, 35, 36, 37, 38, 39, 51, 52, 53, 56, 57, 58, 59) einem Türsystem (60, 61, 62) oder einer vorgesehenen Türkomponente (30, 31, 33, 34, 35, 36, 37, 38, 39, 51, 52, 53, 56, 57, 58, 59) des Türsystems (60, 61, 62) durch den Empfang einer Benutzereingabe zugeordnet wird.

9. Verfahren (200) nach einem der vorhergehenden Ansprüche, wobei, insbesondere vor Schritt a., in einer Türanordnung (100), insbesondere in der Recheneinheit (10), die Kennzeichnung einer Türkomponente (30, 31, 33, 34, 35, 36, 37, 38, 39, 51, 52, 53, 56, 57, 58, 59) zusammen mit weiteren Merkmalen der Türkomponente (30, 31, 33, 34, 35, 36, 37, 38, 39, 51, 52, 53, 56, 57, 58, 59) hinterlegt ist, wobei durch eine Hinterlegung der Kennzeichnung der verbauten Türkomponente (30, 31, 33, 34, 35, 36, 37, 38, 39, 51, 52, 53, 56, 57, 58, 59) zu dem Türsystem (60, 61, 62) und/oder einem Installationsort die weiteren Merkmale dem Türsystem (60, 61, 62) und/oder dem Installationsort zugeordnet werden.

10. Verfahren (200) nach einem der vorhergehenden Ansprüche, wobei die elektronische Konfiguration des Türsystems (60, 61, 62) zumindest eine der folgenden Daten, bevorzugt mehrere der folgenden Daten, besonders bevorzugt alle der folgenden Daten, umfasst:
• Sender und/oder Empfänger von Nachrichten
• Abläufe von Betriebsfunktionen,
• Parameter zum Betrieb des Türsystems (60, 61, 62)
• einen Testablauf für das Türsystem (60, 61, 62), bei dem zur Inbetriebnahme zumindest ein Betriebsschritt und/oder eine Betriebsfunktion des Türsystems (60, 61, 62) getestet wird.

11. Verfahren (200) nach einem der vorhergehenden Ansprüche, wobei zumindest mehrere, insbesondere alle, der Türkomponenten (30, 31, 33, 34, 35, 36, 37, 38, 39, 51, 52, 53, 56, 57, 58, 59) mit einem ersten Bussystem (32) verbunden sind, wobei insbesondere das Steuergerät (30) den übrigen Türkomponenten (30, 31, 33, 34, 35, 36, 37, 38, 39, 51, 52, 53, 56, 57, 58, 59), die mit dem ersten Bussystem (32) verbunden sind, Busadressen zuweist.

12. Verfahren (200) nach einem der vorhergehenden Ansprüche, wobei die elektrische Konfiguration (82) aus einer Datenbank (21, 22) mit mehreren fest vorgegebenen elektrischen Konfigurationen (82) von dem Steuergerät (30) empfangbar ist, wobei die elektronische Konfiguration (82) in dem Steuergerät (30) speicherbar ist, indem vor Schritt a. die Konfiguration (82) einer Kennzeichnung des Türsystems (60, 61, 62) und/oder einem Türsystemtyp (70, 71, 72) und/oder einem Installationsort zugeordnet worden ist oder mittels der verbauten Türkomponententypen (40, 41, 42, 43, 44, 45, 46, 47, 48, 49) eine elektrische Konfiguration (82) zugeordnet wird.

13. Verfahren (200) nach einem der vorhergehenden Ansprüche, wobei das Steuergerät (30) über ein zweites Bussystem (25) mit einer Recheneinheit (10) verbunden ist und/oder über eine insbesondere kabellose Schnittstelle mit einem mobilen Endgerät (50) verbunden ist, wobei das Steuergerät (30) die elektronische Konfiguration (82) von der Recheneinheit (10) oder von dem mobilen Endgerät (50) empfängt, um die Konfiguration (82) in Schritt a. zu speichern.

14. Verfahren (200) nach einem der vorhergehenden Ansprüche, wobei vor Schritt a. durch das Steuergerät (30) von dem mobilen Endgerät (50) zumindest ein Schlüssel empfangen wird, um in einem ersten Bussystem und/oder in einen zweiten Bussystem verschlüsselt zu kommunizieren.

15. Türsystem (60, 61, 62) mit einem Steuergerät (30) zur Durchführung eines Verfahrens nach einem der Ansprüche 1 bis 14.

16. Türanordnung (100) mit einem Türsystem (60, 61, 62) nach Anspruch 15 und einem mobilen Endgerät (50) und/oder einer Recheneinheit (10).

17. Computerprogrammprodukt zur Durchführung des Verfahrens nach einem der Ansprüche 1 bis 14.
